# DEMANDE DE BREVET EUROPEEN

(11) **EP 0 564 343 A1**
(43) Date de publication de la demande: **06.10.1993**
(21) Numéro de dépôt: 93400802.0
(22) Date de dépôt: 29.03.1993
(51) Int. Cl.: F24F 5/00, F24F 3/052

(54) **Installation de traitement d'air**

(30) Priorité: 30.03.1992 FR 9203832
(71) Demandeur: SOCIETE D'ADMINISTRATION ET DE REALISATIONS D'INVESTISSEMENTS (SARI), F-92800 PUTEAUX (FR); CARRIER S.A., F-01120 MONTLUEL (FR)
(72) Inventeur: Elluin, Patrice, F-75016 Paris (FR); Cardon, Philippe, F-78120 La Boissiere Ecole (FR); Haffner, Georges, F-92100 Boulogne-Billancourt (FR)
(74) Mandataire: Martin, Jean-Jacques

(57) **Abrégé**

La présente invention concerne une installation de traitement d'air, destinée à la ventilation et à la climatisation d'une pluralité de salles et comportant à cet effet une pluralité de modules de traitement d'air.

Chaque module de traitement d'air (5) comporte des moyens (69) de stockage d'eau congelable et des moyens (53) de congélation de celle-ci, et des moyens (36, 49, 71 à 78), d'échange thermique entre l'air et cette eau à l'état congelé.

L'application à la simplification des installations de traitement d'air.

## Description

La présente invention concerne une installation de traitement d'air, destinée à la ventilation et à la climatisation d'une pluralité de salles et comportant à cet effet une pluralité de modules de traitement d'air logés dans un local technique et dont chacun comporte notamment:
- un raccord respectif d'aspiration d'air relié à une salle respective,
- un raccord respectif de soufflage d'air relié à la salle respective,
- un circuit interne respectif d'air reliant mutuellement lesdits raccords d'aspiration d'air et de soufflage d'air,
- des moyens respectifs de ventilation et de climatisation interposés dans le circuit interne d'air et comportant notamment des moyens d'échange thermique entre l'air et un milieu réfrigéré,
- des moyens respectifs de raccordement des moyens de ventilation et de climatisation à des moyens d'alimentation en énergie,
- des moyens réglables respectifs de régulation des moyens de ventilation et de climatisation.

Une telle installation est décrite dans EP-B-0 302 768 qui décrit également des modules de traitement d'air particulièrement bien adaptés à la réalisation d'une telle installation en ce qu'ils sont respectivement délimités extérieurement par deux faces latérales planes mutuellement parallèles, par lesquelles ils peuvent être juxtaposés notamment mutuellement, et par des faces périphériques qui raccordent mutuellement ces faces latérales et regroupent les raccords d'aspiration d'air et de soufflage d'air, les moyens de raccordement à des moyens d'alimentation en énergie, éventuellement les moyens réglables de régulation, et des moyens d'accès aux moyens de ventilation et de climatisation et, éventuellement aux moyens réglables de régulation, ou plus généralement à tous les composants sur lesquels on peut avoir à intervenir lors d'opérations normales de maintenance. L'installation peut ainsi présenter un encombrement minimal, du fait de la juxtaposition mutuelle des modules, sans que les opérations normales de maintenance soient entravées en quoi que ce soit. Les faces périphériques des modules comportent en outre de préférence des moyens de support permettant d'extraire ou de replacer un module, dans une rangée de modules juxtaposés, sans avoir à intervenir sur les autres modules de cette rangée, ce qui permet de remplacer aisément et rapidement un module gravement avarié sans démonter les autres modules ni perturber leur fonctionnement.

Pour refroidir l'air en provenance d'une salle respective et , éventuellement, pour partie de l'atmosphère, avant de le renvoyer vers cette salle, des moyens propres à chaque module, interposés dans le circuit interne d'air de celui-ci, assurent un échange thermique entre cet air et un milieu réfrigéré, sous forme d'une batterie d'échange thermique directe entre l'air et de l'eau froide fournie par une installation commune aux différents modules. En pratique, cette batterie dite "froide" de chaque module est raccordée, par l'intermédiaire de tubes partiellement flexibles et d'électrovannes commandées par les moyens réglables respectifs de régulation, à une canalisation d'arrivée d'eau froide et à une canalisation de retour d'eau froide, l'une et l'autre communes aux différents modules et aboutissant à l'installation commune de production d'eau froide.

La présence de ces tubes, électrovannes, canalisations d'arrivée et de retour d'eau froide complique l'installation et constitue une source d'avaries qui, lorsqu'elles affectent l'installation de production d'eau froide ou les canalisations d'arrivée et de retour d'eau froide, par exemple sous forme de fuites, perturbent le fonctionnement de l'ensemble des modules ; en outre, la distance parcourue par l'eau froide entre l'installation de production d'eau froide et la batterie froide de chaque module peut être relativement importante, ce qui donne lieu à des pertes de frigories même si les canalisations d'arrivée et de retour d'eau froide ainsi que les tubes les raccordant aux batteries froides sont correctement calorifugées.

Le but de la présente invention est de remédier à ces inconvénients et, à cet effet, la présente invention propose une installation du type indiqué en préambule, caractérisée en ce que le milieu réfrigéré est de l'eau congelable et en ce que chaque module comporte des moyens respectifs de stockage de l'eau congelable et des moyens respectifs de congélation de celle-ci, commandés par les moyens réglables de régulation respectifs.

Il devient ainsi possible de supprimer la canalisation d'arrivée d'eau froide et la canalisation de retour d'eau froide ainsi que les tubes de raccordement de la batterie froide à ces dernières, ainsi que l'installation commune de production d'eau froide, c'est-à-dire de simplifier l'installation de traitement d'air considérée dans sa globalité, de réduire les risques de fuite et de limiter les conséquences d'une fuite éventuelle au seul module concerné qui, seul, doit être arrêté pour réparation ou changement ; en outre, il est possible de réduire considérablement la longueur du circuit du milieu réfrigéré avec lequel l'air subit un échange thermique au sein de chaque module, d'une part, et d'isoler au mieux ce circuit, directement intégrable au module respectif, ce qui permet d'améliorer considérablement le rendement thermique de l'installation.

En outre, même s'il est vrai que chaque module présente un volume plus important que celui d'un module décrit dans EP-B-0 302 768, une installation conforme à la présente invention peut présenter, du fait de la suppression de l'installation de production d'eau froide commune aux différents modules, un encombrement au sol inférieur à celui d'une installation réalisée conformément aux enseignements de EP-B-0 302 768.

En effet, il est possible de conserver à chaque module un encombrement au sol sensiblement équivalent, seul son encombrement dans le sens de la hauteur étant accru, et correspondant approximativement à celui de la superposition d'un module de traitement d'air du type décrit dans EP-B-0 302 768 et des moyens respectifs de stockage de l'eau congelable ainsi que des moyens respectifs de congélation de celle-ci.

Avantageusement, on conserve également la possibilité de juxtaposer mutuellement les modules correspondant à plusieurs salles, dans le local technique, en réalisant chaque module sous une forme comportant :
- un raccord d'aspiration d'air,
- un raccord de soufflage d'air,
- un circuit interne d'air reliant mutuellement lesdits raccords d'aspiration d'air et de soufflage d'air,
- des moyens de ventilation et de climatisation interposés dans le circuit interne d'air et comportant notamment des moyens d'échange thermique entre l'air et un milieu réfrigéré,
- des moyens de raccordement des moyens de ventilation et de climatisation à des moyens d'alimentation en énergie,
- des moyens réglables de régulation des moyens de ventilation et de climatisation,

ledit module étant délimité extérieurement par deux faces latérales planes mutuellement parallèles et par des faces périphériques qui raccordent mutuellement lesdites faces latérales et regroupent les raccords d'aspiration d'air et de soufflage d'air, les moyens de raccordement à des moyens d'alimentation en énergie, éventuellement les moyens réglables de régulation, et des moyens d'accès aux moyens de ventilation et de climatisation et, éventuellement, aux moyens réglables de régulation, comme le décrit EP-B-0 302 768, et en outre caractérisé en ce que le milieu réfrigéré est de l'eau et en ce que le module comporte, entre lesdits faces latérales ou des prolongements géométriques coplanaires de celles-ci, des moyens propres de stockage de l'eau congelable et des moyens propres de congélation de celle-ci, commandés par les moyens réglables de régulation.

Ainsi, l'encombrement, au sol, d'une installation réalisée conformément à la présente invention peut être en tout point comparable à celui qu'occupent les modules de traitement d'air d'une installation réalisée conformément aux enseignements de EP-B-0 302 768, ce qui correspond, en termes d'encombrement au sol, à une économie de place correspondant à l'encombrement de l'installation de production d'eau froide nécessaire au fonctionnement de l'installation de traitement d'air décrite dans EP-B-0 302 768.

On remarquera que, comme les modules de traitement d'air décrits dans EP-B-0 302 768, les modules selon l'invention peuvent être non seulement juxtaposés mutuellement en un nombre quelconque, tout en offrant une possibilité d'accès à tous les composants auxquels il est nécessaire d'avoir accès pour les opérations normales de maintenance, mais également être juxtaposés notamment en un seul exemplaire à une cloison ou à un mur, par exemple à l'intérieur d'un placard ou d'un dégagement quelconque, pour assurer in situ la ventilation et la climatisation d'une salle déterminée, en conservant cette possibilité d'accès même si le placard ou dégagement qui les reçoit est exigu.

Un autre avantage d'une installation et d'un module de traitement d'air conformes à la présente invention réside dans la possibilité de limiter les besoins en énergie à des besoins en énergie électrique, ce qui simplifie considérablement les raccordements aux moyens d'alimentation en énergie, alors électrique, et permet de disposer d'une grande souplesse d'implantation de plusieurs modules dans un local technique, ou d'un seul module dans un placard ou dégagement quelconque. En effet, les moyens de congélation peuvent avantageusement être électriques, et les moyens de raccordement à des moyens d'alimentation en énergie être par conséquent des moyens de raccordement électrique. Il en est de même lorsque chaque module comporte en outre des moyens de chauffage, interposés dans le circuit interne respectif et commandés par les moyens réglables de régulation respectifs ; ces moyens de chauffage peuvent en effet être électriques, auquel cas ils sont raccordés à des moyens d'alimentation en électricité par des moyens de raccordement électrique, ou encore être constitués par une batterie d'échange thermique entre l'air et de l'eau chaude ou batterie "chaude", interposée dans le circuit interne respectif, commandée par les moyens réglables de régulation respectifs et raccordée à un circuit d'eau chaude propre au module considéré, bien qu'éventuellement extérieur à celui-ci, auquel cas ce module comporte des moyens de raccordement de cette batterie d'échange thermique à un circuit extérieur d'eau chaude, entre lesdites faces frontales ou des prolongements géométriques coplanaires de celles-ci.

Les moyens de congélation propres à chaque module comportent avantageusement un appareil frigorifique respectif, comportant lui-même un évaporateur de fluide frigorifique et des moyens d'échange thermique entre le milieu réfrigéré, à savoir de l'eau congelable conformément à la présente invention, et le fluide frigorifique au niveau de l'évaporateur, ainsi qu'un condenseur de fluide frigorifique et des moyens de circulation d'un fluide de refroidissement en relation d'échange thermique direct avec le fluide frigorifique au niveau du condenseur.

Ces moyens de circulation peuvent avantageusement être communs à plusieurs modules, dont chacun comporte alors des moyens de raccordement du condenseur à des moyens extérieurs de circulation du fluide de refroidissement, entre lesdites faces frontales ou des prolongements géométriques coplanaires de celles-ci, pour drainer au moyen d'un même fluide de refroidissement, en circulation, les calories issues des différents condenseurs.

Les moyens de circulation peuvent comporter des moyens d'évacuation de ces calories du fluide de refroidissement à l'atmosphère, auquel cas ils peuvent être par exemple constitués par un circuit d'extraction d'air vicié, débouchant à l'atmosphère et de toute façon généralement prévu dans les bâtiments munis d'une installation de traitement d'air.

Toutefois, on peut également prévoir que les moyens de circulation comportent des moyens de récupération de calories du fluide de réfrigération à des fins de chauffage.

Ainsi, les moyens de circulation peuvent être constitués par un circuit d'air de climatisation, auquel cas on prévoit que chaque module comporte en outre des moyens d'échange thermique direct avec cet air de climatisation, interposés dans le circuit interne d'air respectif, raccordés au circuit d'air de climatisation et commandés par les moyens réglables de régulation respectifs ; l'air de climatisation, chargé de calories par échange thermique direct avec le fluide frigorifique au niveau des condenseurs, sert ainsi au chauffage de l'air transitant par le circuit interne des modules.

Ils peuvent également être constitués par un circuit d'eau chaude à usage sanitaire ou de chauffage, ou comporter des moyens d'échange thermique direct entre le fluide de refroidissement et de l'eau d'un tel circuit d'eau chaude à usage sanitaire ou de chauffage. Dans les deux cas, le circuit d'eau chaude est avantageusement commun à plusieurs modules, c'est-à-dire généralement à l'ensemble des modules groupés dans un même local technique, et il peut comporter des moyens de chauffage d'appoint.

Une telle production d'eau chaude par récupération de calories au niveau des condenseurs des appareils frigorifiques des différents modules permet de conserver une alimentation en énergie exclusivement électrique de chaque module même lorsque chaque module comporte une batterie d'échange thermique direct entre l'air et de l'eau chaude, interposée dans le circuit interne respectif, puisque cette batterie d'échange thermique peut être raccordée au circuit d'eau chaude précité et commandée par les moyens réglables de régulation respectifs, l'eau chaude ainsi produite servant de fluide de chauffage de l'air transitant par le circuit interne des modules ; naturellement, dans la mesure où les besoins en refroidissement d'air et en chauffage d'air ne sont pas simultanés, le circuit d'eau chaude comporte avantageusement un ballon d'accumulation d'eau chaude, ce qui est d'ailleurs de préférence le cas quel que soit l'usage sanitaire ou de chauffage auquel on destine l'eau chaude produite par récupération des calories issues des condenseurs.

Naturellement, si le circuit d'eau chaude est extérieur aux modules, et notamment commun, chaque module comporte de préférence entre lesdites faces frontales ou des prolongements géométriques coplanaires de celles-ci des moyens de raccordement de la batterie d'échange thermique entre l'air et l'eau chaude à ce circuit extérieur d'eau chaude.

Que les calories produites au niveau du condenseur des appareils frigorifiques correspondant aux différents modules soient évacuées à l'atmosphère ou récupérées pour chauffer de l'air ou de l'eau, le mode concret de congélation de l'eau congelable utilisée à titre de milieu réfrigéré peut être choisi dans une large gamme de possibilités par l'Homme du métier.

Ainsi, les moyens d'échange thermique entre le milieu réfrigéré (eau congelable) et le fluide frigorifique au niveau de chaque module peuvent être des moyens d'échange thermique direct, l'évaporateur de l'appareil frigorifique respectif étant constitué par un circuit de détente directe du fluide frigorifique, placé en relation d'échange thermique direct avec le milieu réfrigéré (eau congelable) au niveau des moyens de stockage.

Cependant, ces moyens d'échange thermique peuvent également être des moyens d'échange thermique indirect et comporter un circuit de fluide caloporteur incluant des moyens d'échange thermique direct entre le fluide caloporteur et le fluide frigorifique, au niveau de l'évaporateur, d'une part, et entre le fluide caloporteur et le milieu réfrigéré (eau congelable), au niveau des moyens de stockage, d'autre part.

Quels que soient les moyens ainsi choisis pour congeler l'eau congelable utilisée à titre de milieu réfrigéré dans chaque module, les moyens d'échange thermique entre l'air et le milieu réfrigéré, c'est-à-dire l'eau congelable, au niveau de chaque module peuvent être également choisis dans une large gamme de possibilités, et notamment consister soit en moyens d'échange thermique indirect, soit en moyens d'échange thermique direct.

Des moyens d'échange thermique indirect entre l'air et le milieu réfrigéré (eau congelable) peuvent comporter, au niveau de chaque module, un circuit de fluide caloporteur incluant des moyens d'échange thermique direct entre le fluide caloporteur et le milieu réfrigéré (eau congelable) au niveau des moyens de stockage, d'une part, et entre le fluide caloporteur et l'air au niveau du circuit interne, d'autre part.

Un tel choix des moyens d'échange thermique entre l'air et le milieu réfrigéré (eau congelable) peut se combiner avec celui de moyens d'échange thermique également indirect entre le milieu réfrigéré (eau congelable) et le fluide frigorifique, auquel cas chaque module peut comporter, de façon particulièrement simple, un seul circuit de fluide caloporteur incluant les moyens d'échange thermique direct entre le fluide caloporteur, unique, et :
- le fluide frigorifique au niveau de l'évaporateur,
- le milieu réfrigéré (eau congelable) au niveau des moyens de stockage,
- l'air au niveau du circuit interne.

Cependant, on peut également prévoir que, lorsque l'on choisit d'équiper chaque module de moyens d'échange thermique indirect entre le milieu réfrigéré (eau congelable) et le fluide frigorifique, ainsi qu'entre l'air et le milieu réfrigéré (eau congelable), chaque module comporte deux circuits de fluide caloporteur distincts, dont l'un inclut les moyens d'échange thermique direct entre le fluide caloporteur et le fluide frigorifique au niveau de l'évaporateur, dont l'autre inclut les moyens d'échange thermique direct entre le fluide caloporteur et l'air au niveau du circuit interne, et qui présentent en commun les moyens d'échange thermique direct entre le fluide caloporteur et le milieu réfrigéré (eau congelable) au niveau des moyens de stockage.

Le choix de cette dernière solution permet de dissocier les circulations du fluide caloporteur pour, d'une part, assurer une transmission de frigories du fluide frigorifique au milieu réfrigéré (eau congelable) et pour, d'autre part, assurer une telle transmission du milieu réfrigéré à l'air, au niveau du circuit interne d'air, sous l'action de moyens moteurs appropriés en fonction de la nature du fluide caloporteur, tels que des pompes s'il est liquide ou des ventilateurs s'il est gazeux.

En effet, on peut utiliser différents fluides à titre de fluide caloporteur et, notamment, le fluide caloporteur peut être un liquide ou de l'air.

Lorsque les moyens d'échange thermique entre l'air et le milieu réfrigéré niveau congelable) sont des moyens d'échange thermique non plus indirect, mais direct, le circuit interne d'air est placé en relation d'échange thermique direct avec le milieu réfrigéré (eau congelable) au niveau des moyens de stockage, ce qui peut donner lieu à des modes de réalisation particulièrement simples de chaque module.

En particulier, dans ce cas, on peut prévoir que les moyens d'échange thermique entre le milieu réfrigéré (eau congelable) et le fluide frigorifique soient des moyens d'échange thermique indirect et comportent un circuit de fluide caloporteur constitué par une partie du circuit interne d'air et incluant des moyens d'échange thermique direct entre le fluide caloporteur ainsi constitué par de l'air et le fluide frigorifique, au niveau de l'évaporateur, d'une part, et entre l'air utilisé comme fluide caloporteur et le milieu réfrigéré (eau congelable), au niveau des moyens de stockage, d'autre part, en prévoyant en outre des moyens pour fermer provisoirement ladite partie du circuit interne d'air sur elle-même en l'isolant des raccords d'aspiration d'air et de soufflage d'air, de façon commandée par les moyens réglables de régulation, ceci afin d'alterner des phases de congélation de l'eau congelable utilisée à titre de milieu réfrigéré et des phases d'échange thermique entre le milieu réfrigéré ainsi constitué et l'air aspiré dans une salle pour être ensuite soufflé en retour dans cette salle.

De préférence, comme il est connu en soi et quelle que soit la façon dont s'effectue l'échange thermique entre l'air aspiré dans une salle pour y être refoulé ensuite et le milieu réfrigéré, constitué d'eau congelable, cet air subit avant cet échange thermique un apport d'air neuf ; par exemple conformément aux enseignements de EP-B-0 302 768, l'installation comporte à cet effet des moyens d'alimentation du circuit interne des modules de traitement d'air en air neuf et chaque module comporte des moyens de raccordement de son circuit interne d'air à ces moyens d'alimentation en air neuf, entre ses faces latérales ou des prolongements coplanaires de celles-ci.

L'installation et le module de traitement d'air conformes à la présente invention peuvent présenter par ailleurs toutes les dispositions décrites dans EP-B-0 302 768, et, en particulier, les modules de traitement d'air d'une installation sont avantageusement identiques, mutuellement juxtaposés par leurs faces latérales dans une position dans laquelle ces dernières sont verticales, et supportés par l'intermédiaire de moyens de préférence disposés au niveau de leurs faces périphériques et permettant de les dégager d'une juxtaposition de modules ou de les insérer dans une telle juxtaposition exclusivement par des mouvements parallèles à leurs faces latérales ; un tel choix est également avantageux lorsqu'un module est utilisé individuellement, dans un placard ou un dégagement quelconque, dans la mesure où les opérations de pose et de dépose éventuelles en sont facilitées, ce qui permet d'envisager l'installation d'un module dans un espace exigu.

D'autres caractéristiques et avantages ressortiront de la description ci-dessous, relative à plusieurs exemples non limitatifs, ainsi que des dessins annexés qui font partie intégrante de cette description.
- La figure 1 montre schématiquement un plan d'installation de traitement d'air conforme à la présente invention.
- La figure 2 montre, en une vue en perspective, avec arrachement partiel, un premier exemple de réalisation d'un module de traitement d'air de cette installation, du type préféré susceptible d'être juxtaposé horizontalement à d'autres modules identiques, ce module occupant sa position de service.
- La figure 3 montre une vue en élévation, partiellement en coupe, d'un deuxième exemple de réalisation d'un module de traitement d'air de l'installation illustrée à la figure 1, également du type préféré susceptible d'être juxtaposé horizontalement à d'autres modules identiques, ce module occupant sa position de suspension.
- La figure 4 montre une vue de ce deuxième exemple en perspective.
- La figure 5 montre schématiquement, en une vue en coupe par un plan perpendiculaire à la rangée que forment les modules juxtaposés, des moyens de récupération de calories équipant l'installation illustrée à la figure 1 et comportant à la fois des composants propres à chaque module, respectivement, et des composants communs à l'ensemble des modules de l'installation.
- La figure 6 illustre schématiquement ces moyens de récupération de calories.
- Les figures 7 et 8 montrent, en des vues analogues à celles des figures 5 et 6, un autre exemple de moyens de récupération de calories.
- La figure 9 montre, en une vue analogue à celle de la figure 3, un troisième exemple de module de traitement d'air susceptible de faire partie d'une installation du type illustré à la figure 1, ce module de traitement d'air étant du type préféré susceptible d'être juxtaposé horizontalement à d'autres modules identiques pour réaliser ladite installation et occupant sa position de service.
- La figure 10 montre un quatrième exemple de réalisation d'un tel module de traitement d'air, en une vue analogue à celle des figures 3 et 9.
- La figure 11 illustre, en une vue en perspective, deux états d'un cinquième exemple de réalisation d'un module de traitement d'air susceptible de faire partie d'une installation du type illustré à la figure 1, ce module étant du type référé susceptible d'être juxtaposé horizontalement à d'autres modules identiques et occupant sa position de service.
- Les figures 12 et 13 illustrent les états respectivement correspondants d'un registre coulissant commandant le passage de l'air à traiter dans le module de la figure 11.
- La figure 14 montre, en une vue analogue à celle des figures 3, 9, 10, un sixième exemple de réalisation d'un module de traitement d'air susceptible de faire partie d'une installation du type illustré à la figure 1, ce module étant du type préféré susceptible d'être juxtaposé horizontalement à d'autres modules identiques et occupant sa position de service.

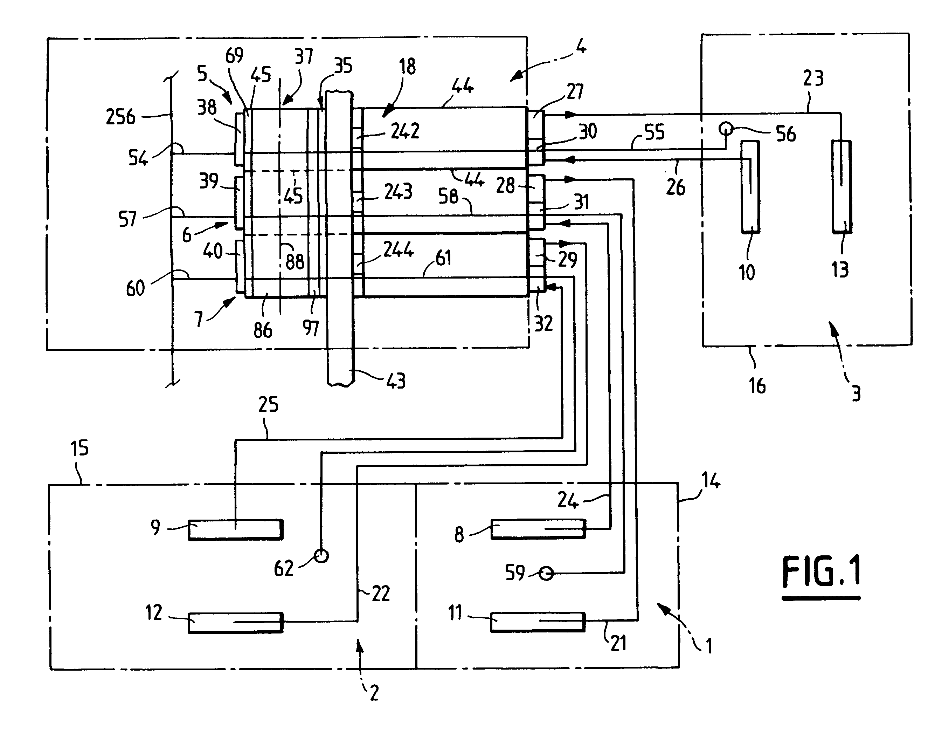

On se réfèrera en premier lieu à la figure 1, où l'on a illustré schématiquement trois salles 1, 2, 3 à ventiler et climatiser, et un local technique 4 regroupant des modules de traitement d'air 5, 6, 7, de préférence mutuellement identiques, respectivement associés à ces trois salles 1, 2, 3, et mutuellement juxtaposés sous forme d'une rangée ; naturellement, cet exemple n'est nullement limitatif et le nombre de salles susceptibles d'être climatisées à partir d'un même local technique, c'est-à-dire le nombre de modules de traitement d'air groupés dans ce local technique, sera généralement supérieur à 3, un seul local technique étant par exemple prévu pour regrouper les modules de traitement d'air correspondant à toutes les salles d'un même étage de bâtiment ; cependant, il ressortira de la description ultérieure des modules de traitement d'air selon l'invention que ces modules peuvent également être utilisés en un exemplaire unique ou en deux exemplaires, logés dans un dégagement tel qu'un placard directement adjacent à une ou, respectivement, deux salles à climatiser, un module de traitement d'air selon l'invention ne nécessitant pas d'apport en énergie autre qu'un apport en énergie électrique, facile à réaliser en tout lieu.

Chacune des salles 1, 2, 3 est équipée, avantageusement sous forme intégrée à un faux plafond, d'au moins une bouche d'aspiration ou de reprise d'air 8, 9, 10 et d'au moins une bouche de soufflage d'air 11, 12, 13 dont le choix et la disposition relative optimale sont du domaine des aptitudes normales d'un Homme du métier ; de préférence, lorsque la salle 1, 2, 3 est équipée d'une fenêtre 14, 15, 16, la bouche de soufflage d'air 11, 12, 13 est disposée entre la bouche d'aspiration d'air 8, 9, 10 et cette fenêtre 14, 15, 16, et choisie d'un type comportant un volet thermostatique d'orientation de l'air soufflé, piloté par la température de soufflage, et par exemple du type fabriqué et commercialisé en France sous la dénommination commerciale "OPTIMIX" par la Firme CARRIER S.A., Filiale de CARRIER CORPORATION, à Paris (France) ; naturellement, d'autres structures de bouche de soufflage d'air, mettant en oeuvre d'autres modes de répartition de l'air soufflé, en fonction de la température de celui-ci, dans chaque salle, pourraient être choisies sans que l'on sorte pour autant du cadre de la présente invention.

A chacune des bouches de soufflage d'air 11, 12, 13 se raccorde une gaine de soufflage d'air respective 21, 22, 23, de même qu'à chaque bouche d'aspiration d'air 8, 9, 10 se raccorde une gaine d'aspiration d'air respective 24, 25, 26, ces différentes gaines étant avantageusement logées, de façon non représentée, dans un espace intermédiaire entre le faux plafond précité et une dalle de plafond, de façon non représentée mais connue d'un Homme du métier.

Avantageusement, les différentes gaines d'aspiration ou de soufflage d'air 21, 22, 23, 24, 25, 26 présentent une section constante, identique d'une gaine à l'autre, sont flexibles ou non, et chacune d'entre elles peut ainsi s'étendre de façon continue, sans raccord intermédiaire, de la salle où se trouve la bouche d'aspiration ou de soufflage d'air respectivement associée jusqu'au local technique 4.

A l'intérieur de ce dernier, chacune des gaines de soufflage d'air 21, 22, 23 se raccorde à un raccord de soufflage d'air 27, 28, 29 du module de traitement d'air 5, 6, 7 respectivement associé et chaque gaîne d'aspiration d'air 24, 25, 26 se raccorde à un raccord d'aspiration d'air 30, 31, 32 du module 5, 6, 7 respectivement associé ; il n'y a aucune intercommunication, c'est-à-dire aucun mélange d'air, entre les différentes gaines d'aspiration d'air de même qu'entre les différentes gaines de soufflage d'air, dans le cas de ce mode de réalisation préféré d'une installation selon l'invention, conforme en cela aux enseignements du brevet européen EP-B-0 302 768 mais on ne sortirait pas du cadre de la présente invention en prévoyant une aspiration d'air et/ou un soufflage d'air communs à plusieurs salles.

De même, dans ce mode de réalisation préféré et conformément aux enseignements du brevet européen précité, l'air à traiter parcourt à l'intérieur de chacun des modules 5, 6, 7, entre le raccord d'aspiration d'air 30, 31, 32 respectif et le raccord de soufflage d'air 27, 28, 29 respectif, un circuit interne indépendant d'un module à l'autre, c'est-à-dire n'autorisant aucun mélange de l'air parcourant les circuits internes respectifs des différents modules 5, 6, 7.

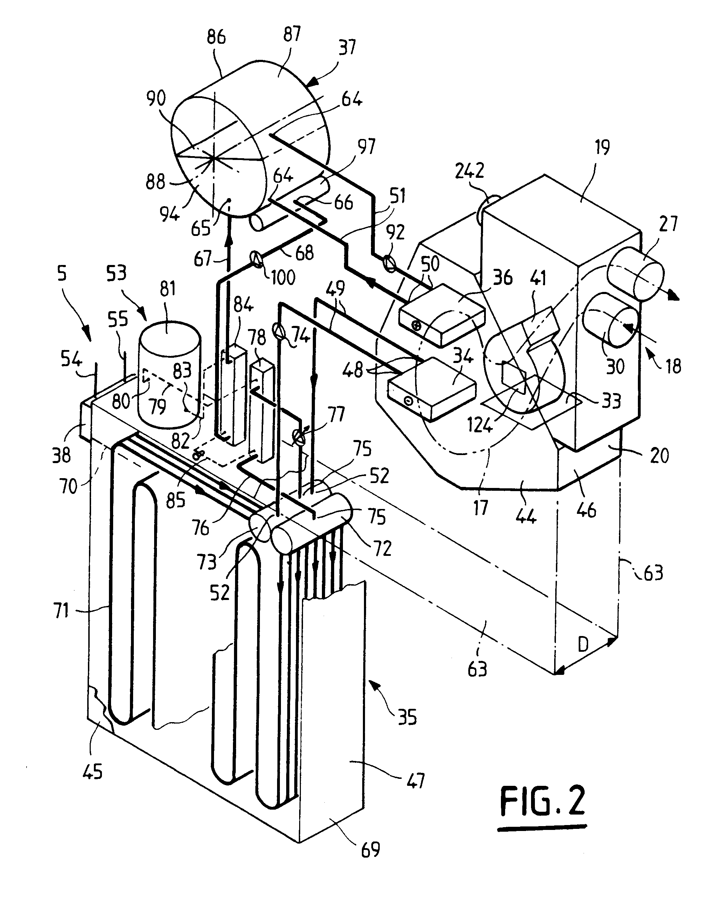

Comme le montre schématiquement la figure 2 à propos du module de traitement d'air 5, le circuit interne ainsi parcouru par l'air à traiter, du raccord d'aspiration d'air 30 au raccord de soufflage d'air 27, présente la forme générale d'un U, comme on l'a schématisé en 17, à l'intérieur d'un sous-ensemble 18 du module de traitement d'air 5.

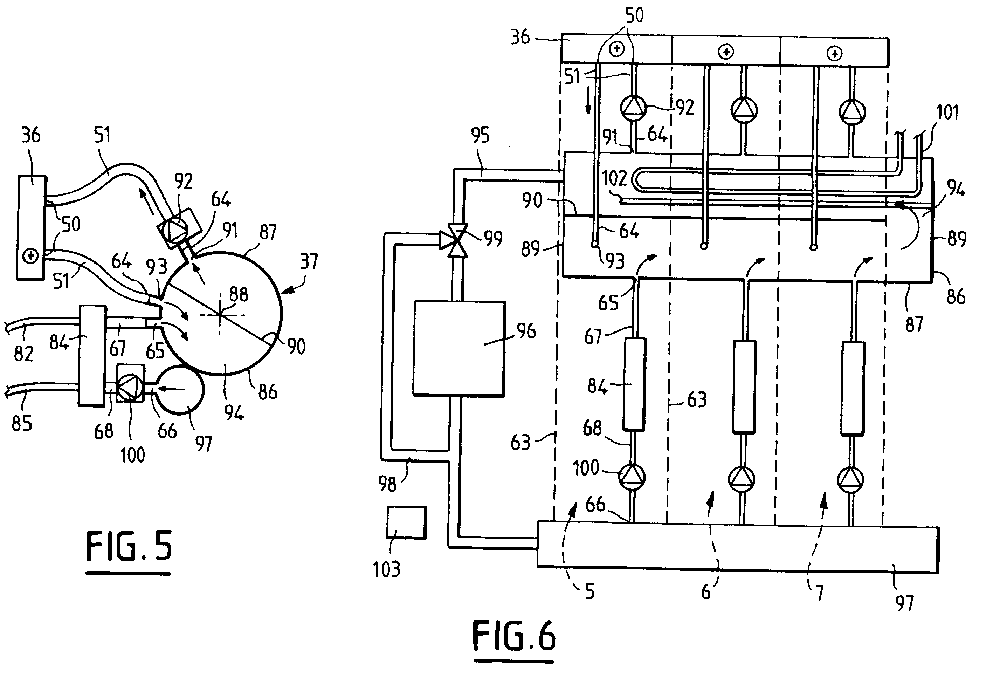

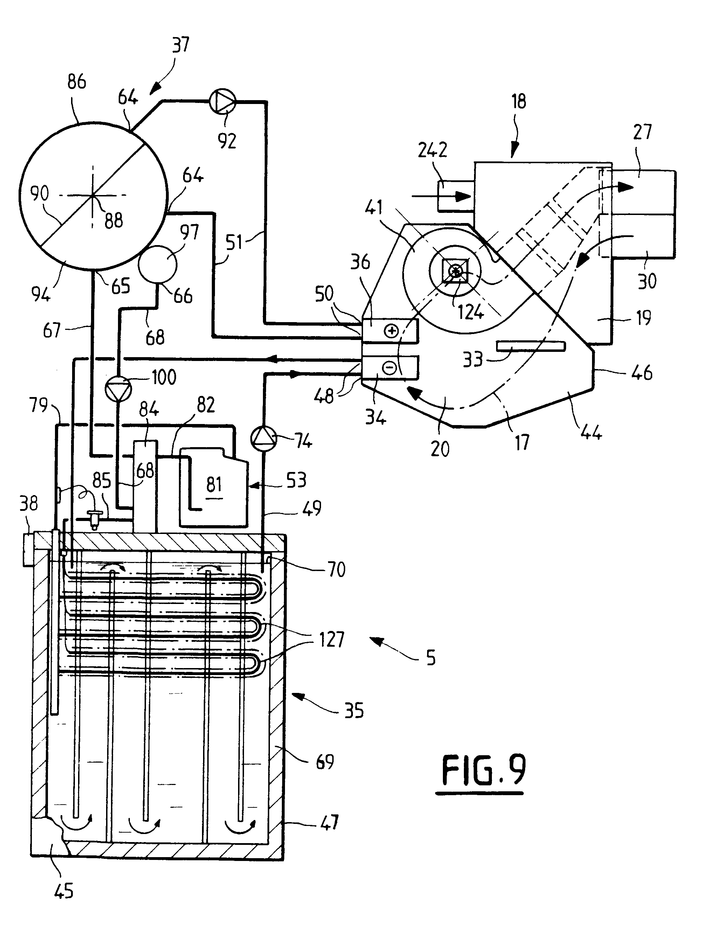

Ce sous-ensemble 18 présente de grandes analogies avec le module de traitement d'air décrit en référence à la figure 9 de EP-B-0 302 768, à titre de variante de réalisation du module de traitement d'air décrit en référence aux figures 6, 7, 8 du même document, auquel on se réfèrera à cet égard.

On rappellera simplement que le sous-ensemble 18 est ainsi constitué de l'assemblage mutuel, solidaire mais amovible, d'un caisson 19 de raccordement et de suspension, suspendu par exemple par l'intermédiaire d'un rail horizontal non représenté dans une zone de plafond du local technique 4 et comportant les raccords d'aspiration et de soufflage d'air 30, 27, et d'un caisson 20 de traitement d'air, constituant dans le cas de EP-B-0 302 768 le module de traitement d'air proprement dit, et guidant l'air provenant du raccord d'aspiration d'air 30, suivant le circuit interne schématisé en 17, pour lui faire traverser successivement :
- un filtre 33,
- une batterie froide 34 au niveau de laquelle l'air parcourant le circuit interne 17 subit un échange thermique direct avec un liquide anti-gel, tel que de l'eau glycolée, lequel liquide antigel est fourni à une température inférieure à la température ambiante, de façon caractéristique de la présente invention, par un autre sous-ensemble 35 du module 5, lequel sous-ensemble 35 repose avantageusement au sol immédiatement sous le sous-ensemble 18,
- une batterie chaude 36 au niveau de laquelle l'air parcourant le circuit interne 17 subit un échange thermique direct avec de l'eau chaude fournie, selon un mode de mise en oeuvre préféré de la présente invention, par encore un autre sous-ensemble 37 quant à lui partiellement propre au module 5 et partiellement commun à l'ensemble des modules 5, 6, 7 réunis dans le même local technique 4, l'échange thermique s'effectuant naturellement alternativement au niveau de la batterie froide 34 et au niveau de la batterie chaude 36, en fonction des besoins, de façon commandée et contrôlée par des moyens réglables 38 de régulation en température et de préférence en débit d'air du module 5, indépendants des moyens correspondants respectifs 39, 40 des autres modules 6, 7 et de préférence portés de façon solidaire par l'un des sous-ensembles, et notamment le sous-ensemble 35, du module 5 considéré,
- et un moto-ventilateur électrique 41, de préférence à vitesse variable, alimenté en électricité par une ligne d'alimentation électrique 256 de façon commandée par les moyens réglables 38 et refoulant vers le raccord de soufflage d'air 27.

Le caisson 19 comporte en outre un raccord 242 qui, raccordé à une canalisation 43 d'arrivée d'air neuf commune aux autres modules 6, 7, comportant à cet effet des raccords respectifs 243, 244, permet de mêler une proportion déterminée, réglable, d'air neuf à l'air arrivant de la salle associée 3 avant de le traiter au niveau du circuit interne 17 puis de le réinjecter dans cette salle.

Comme les modules de traitement d'air décrits en référence aux figures 6 à 9 de EP-B-0 302 768, le sous-ensemble 18 est délimité par deux faces latérales, planes, mutuellement parallèles 44 disposées verticalement en position de service, et par lesquelles les sous-ensembles tels que 18 correspondant aux différents modules sont mutuellement juxtaposés ; de même, le sous-ensemble 35 est notamment délimité par deux faces latérales planes, mutuellement parallèles 45, verticales en position de service, et ces deux faces latérales 45 sont mutuellement espacées d'une distance D égale à celle qui sépare mutuellement les deux faces latérales 44 du sous-ensemble 18, si bien que chacune de ces faces latérales 45 peut être placée dans le prolongement géométrique coplanaire 63 de l'une, respective, des faces latérales 44 du sous-ensemble 18 correspondant au même module 5 et que les différents sous-ensembles tels que 35 des différents modules 5, 6, 7 peuvent être juxtaposés mutuellement par leurs faces latérales 45.

Entre leurs faces latérales respectives 44, 45, les deux sous-ensembles 18, 35 sont délimités par une face périphérique respective 46, 47 qui, comme l'enseigne EP-B-0 302 768, d'une part raccorde mutuellement les deux faces latérales 44, 45 respectivement correspondantes et, d'autre part, regroupe :
- en ce qui concerne le sous-ensemble 18, les raccords 27, 30, 242, des embouchures 48 de raccordement de la batterie froide 34 à des conduites 49 de circulation du liquide antigel, des embouts 50 de raccordement de la batterie chaude 36 à des conduites 51 de circulation d'eau chaude et des moyens de suspension et
- en ce qui concerne le sous-ensemble 35, des embouts 52 de raccordement des conduites 49, les moyens réglables 38 des moyens d'appui au sol, un appareil frigorifique 53 et des moyens 54, 55 de raccordement des moyens réglables 38 d'une part à la ligne 256 d'alimentation en électricité, commune à l'ensemble des modules 5, 6, 7 logés dans le local technique 4, et d'autre part à des moyens de télécommande 56 logés dans la salle associée 3, étant entendu que des moyens analogues de raccordement et de télécommande sont prévus également pour les modules 6 et 7, et référencés respectivement 57, 58, 59 et 60, 61, 62.

De même, entre les prolongements géométriques coplanaires respectifs 63 des faces latérales 44 du sous-ensemble 18 du module 5, le sous-ensemble 37 présente des embouts 64 de raccordement des conduites 51 de circulation d'eau chaude et des embouts 65, 66 de raccordement de conduites 67, 68 de circulation de fluide caloporteur par ailleurs raccordées à l'appareil frigorifique 53, comme il apparaîtra plus loin.

Ainsi sont préservées les possibilités, décrites dans EP-B-0 302 768, d'accomplir les opérations courantes de maintenance non seulement sur le module 5 mais également sur les modules 6 et 7 qui lui sont de préférence identiques sans avoir à séparer ces modules, et d'extraire un module ou l'un des sous-ensembles propres tels que 18 et 35 de celui-ci uniquement par des mouvements parallèles à leurs faces latérales 44, 45, sans avoir à déplacer les autres modules.

On se réfèrera à EP-B-0 302 768 en ce qui concerne les détails de réalisation pratique du sous-ensemble 18 qui peut ne différer du module de traitement d'air décrit en référence à la figure 9 de ce document que par l'absence d'électrovannes au raccordement des batteries froide 34 et chaude 36 avec les conduites respectivement correspondantes 49, 51.

On va par contre détailler à présent le mode de réalisation du sous-ensemble 35 de l'exemple de mise en oeuvre de l'invention illustré à la figure 2.

Dans cet exemple, le sous-ensemble 35 présente extérieurement la forme d'un bac parallélépipédique délimité par des parois plates, définissant ses faces latérales 45 et sa face périphérique 47 ; ce bac 69 est étanche, à l'exception d'évents non représentés en partie haute, et susceptible de contenir, de façon statique, de l'eau congelable jusqu'à un niveau 70 aussi élevé que possible.

Dans cette eau congelable baigne, à l'intérieur du bac 69, un faisceau de tubes étanches 71 conformés en serpentin de façon à être répartis au mieux à l'intérieur du bac 69 et raccordé d'une part à un collecteur d'entrée commun 72 et d'autre part un collecteur de sortie commun 73, ces deux collecteurs 72 et 73 étant mutuellement juxtaposés à l'intérieur du bac 69, dans une zone supérieure de celui-ci et par exemple sensiblement au niveau 70.

Le collecteur de sortie 73 présente les embouts précités 52 de liaison avec les deux conduites 49, dont l'une est équipée d'une pompe électrique 74 ou pompe secondaire, par exemple à vitesse constante, alimentée en électricité par la ligne 256 et propre à aspirer, de façon commandée par les moyens réglables 38, du liquide antigel dans le collecteur de sortie 73 pour l'injecter par la conduite 49 correspondante dans la batterie froide 34 d'où ce liquide antigel revient ensuite vers le collecteur de sortie 73 par l'autre conduite 49.

En outre, chacun des collecteurs d'entrée 72 et de sortie 73 présente un embout respectif 75 pour une conduite respective 76 ; celle de ces conduites 76 qui correspond au collecteur de sortie 73 comporte une pompe électrique 77 ou pompe primaire, à vitesse variable, alimentée en électricité par la ligne 256 de façon commandée par les moyens réglables 38 pour aspirer du liquide antigel dans le collecteur de sortie 73, et ces conduites 76 font partie d'un circuit de liquide antigel fermé sur un évaporateur 78 de l'appareil frigorifique 53.

Au niveau de l'évaporateur 78, avantageusement logé dans une même enceinte thermiquement isolée que le bac 69, le liquide antigel pompé dans le collecteur de sortie 73 par la pompe primaire 77 avant d'être ramené au collecteur d'entrée 72 est placé en relation d'échange thermique direct avec un fluide frigorifique qui circule à l'intérieur d'un circuit comportant en outre une conduite 79 de liaison de l'évaporateur avec l'admission 80 d'un compresseur 81 de l'appareil frigorifique 53, alimenté en électricité par la ligne 256 de façon commandée par les moyens réglables 38, une conduite 83 de liaison entre le refoulement 83 du compresseur 81 et un condenseur 84 qui, tout en faisant partie de l'appareil frigorifique 53, peut être porté soit par le sous-ensemble 35, soit par le sous-ensemble 37 avec lequel il coopère comme il apparaîtra plus loin, et une conduite 85 comportant un détendeur et assurant la liaison entre le condenseur 84 et l'évaporateur 78.

Au niveau du condenseur 84, le fluide frigorifique est placé en relation d'échange thermique direct avec un fluide de refroidissement, en pratique constitué par l'eau alimentant la batterie chaude en tant qu'eau chaude dans l'exemple de mise en oeuvre préféré illustré, ce qui permet d'utiliser, afin de chauffer de l'eau utilisable notamment pour alimenter la batterie chaude 36, et/ou de l'eau sanitaire, les calories produites au niveau du condenseur 84 lorsque l'appareil frigorifique 53 est en service, c'est-à-dire lorsqu'il provoque par l'intermédiaire de l'évaporateur 78 et alors que la pompe primaire 77 est en service la circulation de liquide antigel refroidi dans les faisceaux de tubes 71, à l'intérieur du bac 69, pour congeler l'eau contenue dans celui-ci.

Dans la mesure où les besoins d'alimentation de la batterie chaude 36 en eau chaude et les besoins en eau chaude sanitaire ne coïncident pas nécessairement avec les besoins de congélation de l'eau dans le bac 69, c'est-à-dire n'apparaissent pas nécessairement lorsque l'appareil frigorifique 53 est en service, le sous-ensemble 37 comporte notamment un ballon d'eau chaude 86, thermiquement isolé, de préférence commun à l'ensemble des modules 5, 6, 7 situés dans le même local technique 4 bien que l'on puisse également prévoir également des ballons d'eau chaude individuels, associés respectivement aux différents modules.

Comme le montrent également les figures 5 et 6, le ballon d'eau chaude 86, ici commun aux modules 5, 6, 7, est délimité d'une part par une paroi 87 cylindrique de révolution autour d'un axe horizontal 88 parallèle à la rangée que forment les modules 5, 6, 7 mutuellement juxtaposés, et par deux joues extrêmes 89 perpendiculaires à l'axe 88. A l'intérieur du ballon 86 est fixée une chicane 90 qui présente la forme d'une paroi plate, étanche, passant par l'axe 88 et se raccordant de façon étanche à l'une des joues 89 et, de part et d'autre de l'axe 88, à la paroi 87 de façon à limiter les possibilités de franchissement de cette chicane 90 par l'eau, à l'intérieur du ballon d'eau chaude 86, à la proximité immédiate de l'autre joue 89.

De préférence, comme le montre plus particulièrement la figure 5, la chicane 90 est inclinée, à l'intérieur du ballon d'eau chaude 86, et ceci de façon à descendre à partir de sa zone la plus proche du sous-ensemble 18, auquel le sous-ensemble 37 est juxtaposé au-dessus du sous-ensemble 35.

Respectivement au-dessus et en dessous de la zone la plus haute de la chicane 90, pour chaque module et par exemple pour le module 5, la paroi 87 du ballon d'eau chaude 86 présente, entre les prolongements géométriques coplanaires 63 respectifs des faces latérales 44, 45 du module, un embout 91 de raccordement de l'une des deux conduites 51. laquelle conduite 51 est munie d'une pompe électrique 92 de chauffage, alimentée par la ligne 256 de façon commandée par les moyens réglables 38 et propre à aspirer de l'eau chaude dans le ballon 87 pour la refouler dans la batterie chaude 36 respectivement correspondante, et un embout 93 de raccordement de l'autre conduite 51, laquelle assure le retour de l'eau chaude depuis la batterie chaude 36 considérée jusqu'au ballon d'eau chaude 86.

L'eau du ballon d'eau chaude 86 peut ainsi assurer de façon directe l'alimentation de chaque batterie chaude telle que 36 en eau chaude.

En outre, dans la joue 89 du ballon d'eau chaude 86 dont la chicane 90 est jointive, au-dessus de cette chicane 90, débouche à l'intérieur du ballon d'eau chaude 86 une conduite 95 menant à une batterie 96 d'échange thermique entre l'eau soutirée du ballon d'eau chaude 86 par cette conduite 95 et un fluide caloporteur d'évacuation des calories de cette eau ; ce fluide peut être notamment de l'air extrait des salles 1, 2, 3 à conditionner, en compensation de l'air neuf introduit au niveau des différents sous-ensembles 18, lequel air extrait est acheminé à l'atmosphère par une ventilation mécanique forcée non représentée, le faisant circuler dans une gaine à l'intérieur de laquelle est placée la batterie 96. A sa sortie de cette batterie 96, l'eau chaude ayant ainsi perdu une part de ses calories est acheminée vers un collecteur tubulaire 97 rectiligne, parallèle à l'axe 88 et longeant le ballon d'eau chaude 86 de l'une à l'autre des joues 89 de celui-ci, entre celui-ci et le sous-ensemble tel que 18 de chacun des modules 5, 6, 7. En parallèle de la batterie à eau 96 est prévu, dans la conduite 95, un bipasse 98 commandé par une électrovanne 99 pour conduire directement, c'est-à-dire sans traverser la batterie 96, au collecteur 97 l'eau prélevée dans le ballon d'eau chaude 86 par la conduite 95 si l'effet du refroidissement de l'eau chaude à la traversée de la batterie 96 n'est pas recherché.

Pour chaque module et notamment au niveau du module 5, entre les prolongements géométriques coplanaires 63 des faces latérales 44, 45, le collecteur 97 présente l'embout précité 66 de raccordement de la conduite 68 menant au condenseur 84, laquelle est munie d'une pompe électrique 100 alimentée par la ligne 256 de façon commandée par les moyens réglables 38 pour aspirer de l'eau chaude dans le collecteur 97 et l'acheminer vers le condenseur 84, où cette eau est placée en relation d'échange thermique direct avec le fluide frigorifique transitant par le condenseur 84 entre l'échappement 83 du compresseur 81 et l'évaporateur 78. La conduite 67, assurant la reprise de l'eau après sa traversée du condenseur 84, débouche par l'embout 65 dans la paroi 87 du ballon d'eau chaude 86, en dessous de la chicane 90 et entre les prolongements géométriques coplanaires 63 des faces latérales 44, 45 du module.

Avantageusement, on peut prévoir qu'un serpentin 101 faisant partie d'un circuit d'eau sanitaire parcoure l'intérieur du ballon d'eau chaude 86, au-dessus de la chicane 90, de telle sorte que cette eau sanitaire subisse un chauffage par échange thermique direct avec l'eau contenue dans le ballon d'eau chaude 86.

Dans ces conditions, le fonctionnement du module 5 est le suivant, étant entendu que les autres modules 6, 7 fonctionnent de façon identique, de préférence indépendamment l'un de l'autre.

En période chaude, nécessitant un refroidissement de l'air parvenant au module 5 par le raccord 30, en provenance de la salle associée 3, et de l'air neuf parvenant au module 5 par le raccord 242, avant injection par l'intermédiaire du raccord 27 dans la salle 3 considérée, la batterie chaude 36 n'est pas en service mais la batterie froide 34 doit être en mesure de refroidir l'air transitant dans le circuit interne 17 du sous-ensemble 18 du module 5 ; on supposera que la salle 3 considérée n'est occupée que le jour, c'est-à-dire que les besoins en refroidissement de l'air de cette salle n'apparaissent que le jour.

De nuit, le compresseur 81 fonctionne, et la pompe primaire 77 fonctionne de même à sa vitesse maximale, de façon à provoquer dans les faisceaux de tubes étanches 71 une circulation de fluide frigorifique qui provoque la congélation de l'eau à l'intérieur du bac 69 ; la pompe secondaire 74 est par contre arrêtée. Au cours de ce fonctionnement, la pompe de condenseur 100 est en service si bien que l'eau du ballon 86 circule par la conduite 95, le collecteur 97, la conduite 68, le condenseur 84 et la conduite 67, et subit du passage du condenseur 84 un réchauffage; si la température du ballon 86 augmente du fait de la non utilisation d'eau chaude sanitaire et/ou d'eau chaude de chauffage, l'électrovanne 99 fait passer cette eau, circulant du ballon d'eau chaude 86 vers le collecteur 97, dans la batterie 96 où cette eau perd une partie de ses calories ; dans l'hypothèse contraire, l'électrovanne 99 fait passer l'eau dans le bipasse 98 afin qu'elle parvienne au collecteur 97 à une température approximativement identique à celle à laquelle elle se trouve dans le ballon d'eau chaude 86.

De jour, lorsque la batterie froide 34 est mise en service par les moyens réglables 38, le compresseur 81 est en principe arrêté et l'alimentation de la batterie froide 34 en frigories s'effectue dans toute la mesure du possible exclusivement par destockage des frigories accumulées sous forme d'eau congelée dans le bac 69. A cet effet, la pompe secondaire 74 est mise en service, à sa vitesse généralement constante, pour faire circuler du liquide antigel entre la batterie froide 34 et le collecteur 73, et la pompe primaire 77 est mise en service à une vitesse variant, sous la commande des moyens réglables 38, de façon à faire circuler le liquide antigel à l'intérieur du faisceau de tubes 71 et alimenter ainsi le collecteur 73 en frigories déstockées du bac 69 ; si la température à laquelle on veut amener la salle 3 par refroidissement, comparée à la température ambiante, est telle qu'un destockage des frigories ainsi accumulées dans le bac 69 ne suffise pas, ce que les moyens réglables 38 constatent par le fait qu'il est nécessaire de faire fonctionner la pompe primaire 77 à sa vitesse maximale, ou par le fait que des sondes de température émettent un signal approprié, le compresseur 81 est remis en route automatiquement pour produire des frigories, d'une part pour alimenter la batterie froide 34 et d'autre part, dans toute la mesure du possible, pour accumuler à nouveau des frigories sous forme d'eau glacée à l'intérieur du bac 69.

En période chaude, les calories récupérées par l'eau du ballon 86 à son passage dans les condenseurs tels que 84 peuvent être suffisantes pour satisfaire aux besoins en termes d'eau chaude sanitaire et d'eau chaude destinée aux batteries chaudes 36 des différents modules.

Pour assurer une production d'eau chaude également suffisante l'hiver, c'est-à-dire notamment lorsque les batteries chaudes 36 doivent être en service dans la journée, on peut avantageusement prévoir la remise en fonctionnement d'appareils frigorifiques afin de produire des calories aux condenseurs et de ce fait reprendre le stockage et/ou prévoir à l'intérieur du ballon d'eau chaude 86 des moyens de chauffage auxiliaire présentant avantageusement la forme d'une résistance électrique chauffante 102 disposée à l'intérieur du ballon d'eau chaude 86, au-dessus de la chicane 90, et alimentée par la ligne 256 de façon commandée.

On comprendra aisément que le fonctionnement de cette résistance électrique 102 de même que celui de l'électrovanne 99 sont commandés non pas individuellement, au niveau des moyens réglables 38, 39, 40 des différents modules 5, 6, 7, mais au niveau d'une gestion technique centralisée 103 qui peut être aisément réalisée à cet effet par un Homme du métier et peut également imposer aux moyens réglables 38, 39, 40 propres aux différents modules 5, 6, 7 un certain nombre de valeurs de consigne de paramètres de fonctionnement, en fonction par exemple des périodes de la journée, de priorités données à une salle ou à une autre, etc....

Le mode de récupération des calories issues des différents condenseurs 84 qui vient d'être décrit, en vue de produire de l'eau chaude, fait appel à un liquide caloporteur, en pratique cette eau elle-même, placé en relation d'échange thermique direct, au niveau de chaque condenseur 84, avec le fluide frigorifique évoluant entre le compresseur 81 et l'évaporateur 78.

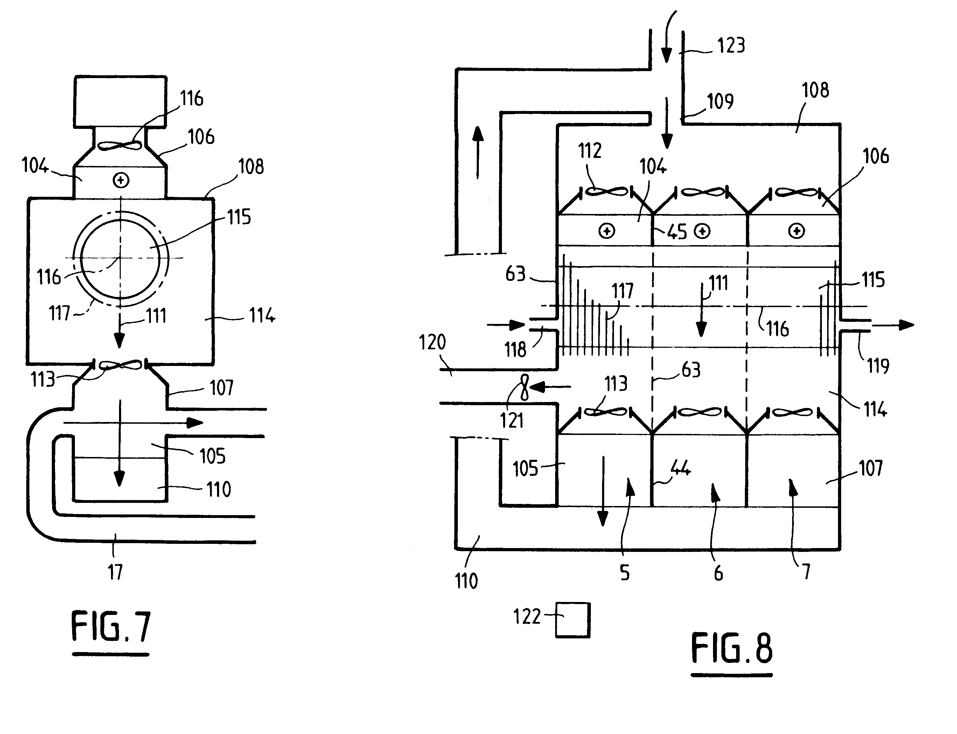

On ne sortirait pas du cadre de la présente invention en remplaçant cet échange thermique entre un liquide et le fluide frigorifique par un échange thermique entre un gaz, et notamment de l'air, et ce fluide frigorifique et on a précisément illustré aux figures 7 et 8 une installation dans laquelle, au lieu d'assurer la condensation du fluide frigorifique au niveau des différents condenseurs 84 par circulation d'un liquide, en pratique de l'eau, on provoque cette condensation par circulation d'un gaz, en pratique de l'air, utilisé ensuite pour réchauffer de l'eau à usage sanitaire ou à usage d'alimentation des batteries chaudes 36 des différents modules, ces batteries chaudes 36 décrites en référence à la figure 2 comme des batteries d'échange air - eau pouvant toutefois dans ce cas être avantageusement remplacées par des batteries d'échange air - air.

On a précisément illustré aux figures 7 et 8 un tel mode de récupération des calories par échange entre de l'air et le fluide frigorifique au niveau de condenseurs tels que 104 remplaçant, au niveau de chacun des modules 5, 6, 7, le condenseur tel que 84 respectif et avec échange entre ce même air et l'air circulant dans les circuits internes tels que 17 des sous-ensembles tels que 18 des différents modules 5, 6, 7 au niveau d'échangeurs air - air tels que 105 remplaçant, au niveau de chaque module, la batterie chaude telle que 36 respectivement correspondante.

Les condenseurs tels que 104 sont alors disposés, dans les sous-ensembles tels que 35 des différents modules 5, 6, 7, de façon à se juxtaposer mutuellement par les faces latérales 45 de ces sous-ensembles et les échangeurs air - air tels que 105 tenant lieu de batterie chaude sont disposés, au niveau des sous-ensembles tels que 18, de façon à se juxtaposer mutuellement par les faces latérales telles que 44 de ces derniers, de façon à former respectivement une batterie 106 de condenseurs tels que 104 et une batterie 107 d'échangeurs air - air tels que 105, respectivement alignés parallèlement à la juxtaposition de modules 5, 6, 7.

Un carter 108 commun aux différents modules 5, 6, 7 enveloppe les deux batteries 106 et 107 et détermine un circuit d'air qui, d'une gaine d'entrée 109 du carter 108 vers une gaine de sortie 110 de celui-ci, traverse successivement la batterie de condenseurs tels que 104 et la batterie 107 d'échangeurs air - air tels que 105, dans un sens déterminé 111.

Respectivement immédiatement en aval de chaque condenseur tel que 104 et immédiatement en aval de chaque échangeur air - air tel que 105, en référence au sens 111, est disposé à l'intérieur du carter 108 un moto-ventilateur électrique respectif tel que 112, 113 alimenté par la ligne 236 de façon commandée par les moyens réglables de régulation tels que 38 du module respectivement correspondant tels que 5.

En outre, dans un volume 114 du carter 108 intermédiaire entre les batteries 106 et 107 est disposé un ballon d'eau chaude sanitaire 115 présentant par exemple une forme cylindrique de révolution autour d'un axe 116 parallèle à l'alignement des modules 5, 6, 7 et présentant extérieurement des ailettes 117 d'échange thermique avec l'air se déplaçant dans le sens 111 de la batterie 106 vers la batterie 107 ; ce ballon 115 est pourvu une entrée 118 d'eau froide sanitaire, à une extrémité, et d'une sortie 119 d'eau chaude sanitaire, à son autre extrémité.

Par ailleurs, dans le volume 114 débouche, entre le ballon 115 et les moto-ventilateurs tels que 113 des échangeurs air - air tels que 105, une évacuation 120 d'air chaud munie d'une ventilation mécanique forcée 121 commandée par une gestion technique centralisée 122 remplaçant la gestion technique centralisée 103 dans l'ensemble de ses fonctions et notamment dans sa fonction d'éviter une surchauffe au niveau du ballon 115 ; avantageusement, le moto-ventilateur 121 est un moto-ventilateur à vitesse variable.

A l'extérieur du volume 114, l'air traversant celui-ci accomplit pour l'essentiel un circuit fermé, la gaine de sortie 110 rejoignant la gaine d'entrée 109 ; toutefois, des moyens schématisés en 123 permettent d'injecter dans ce circuit fermé de l'air neuf, amené par la canalisation 43 si l'on se réfère à la figure 1, ou encore de l'air extrait des salles à climatiser en vue d'une évacuation vers l'extérieur, transitant par une gaine analogue à celle dans laquelle se situe la batterie 96 si l'on se réfère à la figure 6.

Le fonctionnement du dispositif de récupération de calories illustré aux figures 7 et 8 se comprend aisément. Lorsque les compresseurs tels que 81 sont en service, notamment pour provoquer un stockage de frigories dans les bacs tels que 69 respectivement correspondants, l'air traversant les condenseurs tels que 104 en y provoquant la condensation du fluide frigorifique de ces différents compresseurs tels que 81 se charge de calories dont il perd une partie au contact des ailettes 117 du ballon d'eau chaude 115, en provoquant un réchauffage de l'eau dans ce ballon; selon que, simultanément, il est ou non besoin de réchauffer l'air de l'une ou l'autre des salles 1, 2, 3, l'air encore chaud peut respectivement traverser l'échangeur air - air tel que 105 respectivement correspondant, sous l'action du moto-ventilateur correspondant tel que 113, pour réchauffer l'air circulant dans le circuit interne tel que 17 du module 5, 6, 7 respectivement correspondant avant de parvenir à la gaine de sortie 110 qui le ramène à la gaine d'entrée 109, ou être évacué par l'évacuation 120 et le moto-ventilateur 121. Lorsque les compresseurs tels que 81 sont arrêtés et que, éventuellement, des besoins en calories apparaissent au niveau de l'un ou l'autre des échangeurs air - air tels que 105, la température dans la salle respectivement correspondante étant tombée en dessous d'une valeur de consigne prédéterminée, le moto-ventilateur tel que 113 correspondant peut être mis en service, sous l'action des moyens réglables de régulation 38, 39, 40 respectivement correspondants, pour provoquer une circulation d'air notamment dans le sens 111, à l'intérieur du volume 114, et reprendre au moyen de cet air des calories de l'eau chaude située dans le ballon 115 afin de transférer ces calories, au niveau de l'échangeur air - air tel que 105 correspondant, à l'air circulant dans le circuit interne tel que 17 du module 5, 6, 7 respectivement correspondant.

De préférence, comme le ballon d'eau chaude 86, le ballon d'eau chaude 115 est de préférence muni de moyens de chauffage auxiliaires, notamment électriques, suppléant si besoin est à une insuffisance d'apport de calories par l'air transitant par le volume 114.

Naturellement, au lieu de récupérer les calories pouvant apparaître au niveau des condenseurs tels que 84 ou 104 lors du fonctionnement des compresseurs tels que 81, on peut également prévoir d'évacuer ces calories à l'atmosphère par échange thermique direct, au niveau de chaque condenseur tel que 84 ou 104, avec un fluide qui peut être rejeté directement à l'atmosphère, auquel cas on utilise naturellement au titre de ce fluide l'air extrait des différentes salles 1, 2, 3 pour être rejeté à l'extérieur en compensation de l'air neuf introduit au niveau de chaque module, les différents condenseurs se présentant alors sous la forme d'échangeurs du type décrit en 104, placés dans la gaine véhiculant cet air, ou encore un fluide subissant ensuite un échange thermique avec l'air ambiant, et par exemple une eau de réfrigération ensuite acheminée vers des échangeurs eau - air ambiant. Dans un tel cas, le chauffage de l'eau sanitaire et le chauffage de l'air transitant par le circuit interne tel que 17 de chaque module doivent être assurés par des moyens différents ; en particulier, les batteries chaudes tels que 36 et 105 des différents modules 5, 6, 7, précédemment décrites, peuvent avantageusement être alors remplacées par des résistances électriques chauffantes comme on l'a proposé dans EP-B-0 302 768 ; de telles résistances électriques chauffantes peuvent être placées avantageusement à l'admission telle que 124 des différents moto-ventilateurs tels que 41.

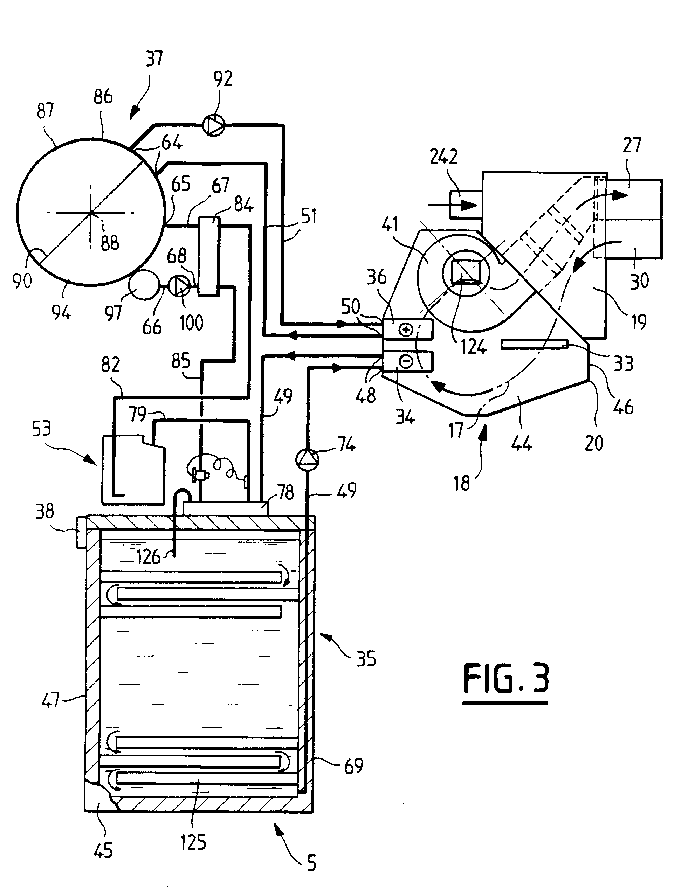

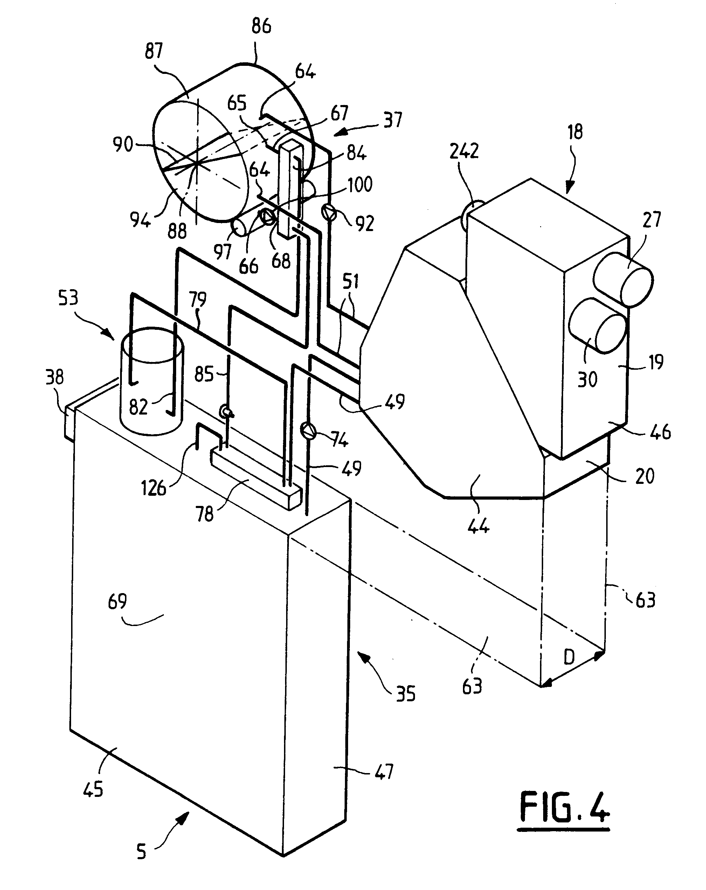

Naturellement, le mode de production et de stockage de frigories qui vient d'être décrit, de même que le mode de fourniture de ces frigories à la batterie froide 36 d'un module tel que 5 ne constituent que des exemples non limitatifs et on a illustré aux figures 3 et 4 un mode de réalisation d'un module 5 différent, à cet égard, de celui qui est illustré à la figure 2.

On retrouve toutefois aux figures 3 et 4, à l'identique, les sous-ensembles 18 et 37 du module dont seul le sous-ensemble 35 et les liaisons entre ce dernier, d'une part, et les deux autres sous-ensembles 18 et 37, d'autre part, sont modifiés par rapport à ce que l'on a décrit en référence à la figure 2.

De même sont conservés à l'identique l'appareil frigorifique 53 et les connexions de celui-ci avec le sous-ensemble 37, d'une part, et les connexions entre les sous-ensembles 37 et 18, d'autre part, étant entendu que le sous-ensemble 37 pourrait être remplacé par le dispositif illustré aux figures 7 et 8 de même que par des moyens d'évacuation directe ou indirecte, vers l'atmosphère, des calories reprises au niveau des condenseurs tels que 84 des différents appareils frigorifiques tels que 53, comme on l'a précédemment décrit.

Dans le cas de ce mode de réalisation, le bac 69 ne contient pas directement l'eau congelable comme c'est le cas dans le mode de réalisation décrit en référence à la figure 2, mais le liquide antigel tel que de l'eau glycolée destiné à alimenter la batterie froide 36 du sous ensemble 18 ; à l'intérieur du bac 69, ce liquide antigel baigne des bouteilles 125 de stockage de glace, disposées de façon à constituer des chicanes pour le liquide antigel, entre le haut du bac 69 et le bas de celui-ci ; la réalisation de telles bouteilles de stockage de glace est connue en elle-même et ne nécessite pas davantage de description.

Le liquide antigel est dans ce cas repris dans une zone inférieure du bac de stockage 69 par celle des conduites 49 menant à la batterie froide 36 qui comporte la pompe 74 alors que l'autre de ces conduites 49 se raccorde directement à l'évaporateur 78 à l'intérieur duquel le liquide antigel en provenance de la batterie froide 36 est mis en relation d'échange thermique direct avec le fluide frigorigène de l'appareil frigorifique 53 avant d'être réinjecté à l'intérieur du bac de stockage 69, dans une zone supérieure de celui-ci, par une conduite de sortie 126 de l'évaporateur 78.

On remarquera que, dans un tel cas, l'évaporateur 78 pourrait être placé à l'intérieur du bac de stockage 69 et baigner dans le liquide antigel, auquel cas la conduite 126 serait superflue.

Naturellement, le module illustré aux figures 3 et 4 conserve de préférence les caractéristiques de coplanéarité des faces latérales des différents sous-ensembles et d'absence, sur ces faces latérales, de composants auxquels il est nécessaire d'avoir accès pour assurer la maintenance, comme le montre la figure 4, de même que la possibilité d'extraction au moins des sous-ensembles 18 et 35 à partir d'une rangée de tels sous-ensembles respectivement mutuellement juxtaposés, par des mouvements s'effectuant exclusivement parallèlement à leurs faces latérales.

Le fonctionnement du module 5 illustré aux figures 3 et 4 est le suivant.

Lorsque la salle respectivement correspondante 3 ne nécessite pas de climatisation, le moto-ventilateur 71 étant arrêté, et par exemple la nuit, on provoque par fonctionnement simultané du compresseur 81 et de la pompe 74, sous la commande des moyens réglables 38, une circulation du liquide antigel dans le bac 69, la batterie froide 36 et l'évaporateur 78, ce qui provoque au passage son refroidissement et par conséquent la congélation de l'eau se trouvant dans les bouteilles 125.

Lorsque, ensuite, le module doit fonctionner pour assurer le refroidissement de la salle 3 associée, le moto-ventilateur 71 étant alors mis en route, le compresseur 81 est en principe arrêté et la pompe 74, commandée par les moyens réglables 38, provoque une circulation de liquide antigel entre le bac de stockage 69 et la batterie froide 36, avec destockage progressif des frigories accumulées par l'eau gelée dans les bouteilles 125 ; si ce destockage devient excessif, ce que constatent des sondes de température, le compresseur 81 peut être remis en route pour fournir à la batterie froide 36 les frigories nécessaires.

Le fonctionnement du module pour assurer le chauffage de la salle 3 associée peut quant à lui être identique à celui du module décrit en référence à la figure 2.

On se réfèrera à présent à la figure 9 où l'on a illustré un module 5 qui, par ailleurs identique à ceux qui ont été décrits en référence à la figure 2 et aux figures 3 et 4 et pouvant présenter les mêmes variantes de réalisation notamment quant à la façon dont sont reprises, pour récupération ou évacuation, les calories produites au niveau du condenseur 84 de l'appareil frigorifique 53, en diffère par la façon dont sont accumulées puis reprises les frigories à l'intérieur du bac 69.

Comme dans le cas du mode de réalisation décrit en référence aux figures 3 et 4, ce bac 69 contient directement le liquide tel que de l'eau, toutefois congelable dans ce cas, que celle des conduites 49 qui comporte la pompe 74 achemine en fonction des besoins vers la batterie froide 34 d'où l'autre conduite 49 ramène ce liquide vers l'intérieur du bac 69. Toutefois, l'appareil frigorifique 53 comporte un évaporateur tubulaire 26 immergé, et le liquide en provenance de la batterie froide 34 est injecté directement dans le bac 69 par la conduite 49 correspondante, c'est-à-dire sans traverser un évaporateur tel que décrit à propos des autres modes de réalisation et sans être soumis à un échange thermique avec le fluide frigorifique au niveau d'un tel évaporateur.

Plus précisément, le condenseur 84 est raccordé par la conduite 85, comportant un détendeur, à un évaporateur tubulaire à détente directe immergé 127 réparti sur la hauteur du bac de stockage 69 et branché en parallèle entre la conduite 85 et la conduite 79 de retour à l'admission (non représentée) du compresseur 81. Dans ce cas, de la glace se forme directement autour des serpentins 127, par congélation localisée du liquide, dont la phase encore liquide baigne la glace ainsi formée, et le bac 69 ne comporte pas de bouteilles de stockage d'eau congelable ou de glace, analogue aux bouteilles 125 décrites en référence à la figure 3.

Un Homme du métier déduira aisément le mode de fonctionnement du module illustré à la figure 9, du mode de fonctionnement du module illustré aux la figures 3 et 4.

Les trois modes de réalisation d'un module selon l'invention qui viennent d'être décrits en référence aux figures 2, 3 et 4, 5 respectivement mettent en oeuvre l'utilisation d'un liquide pour assurer un transfert thermique entre la glace accumulée à l'intérieur du bac tel que 69 et l'air circulant suivant le circuit interne tel que 17 du sous-ensemble tel que 18 du module tel que 5.

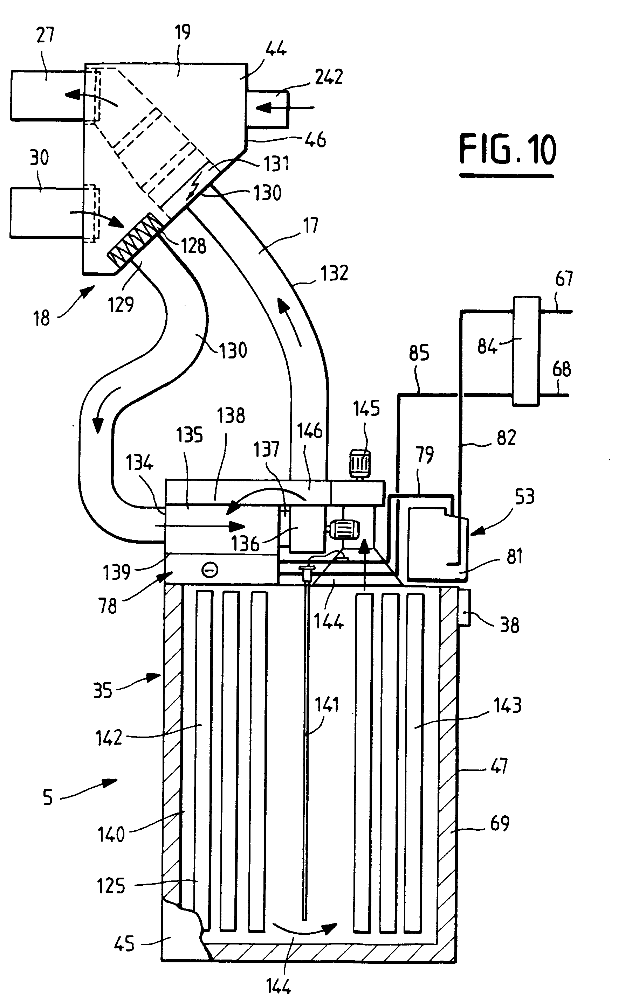

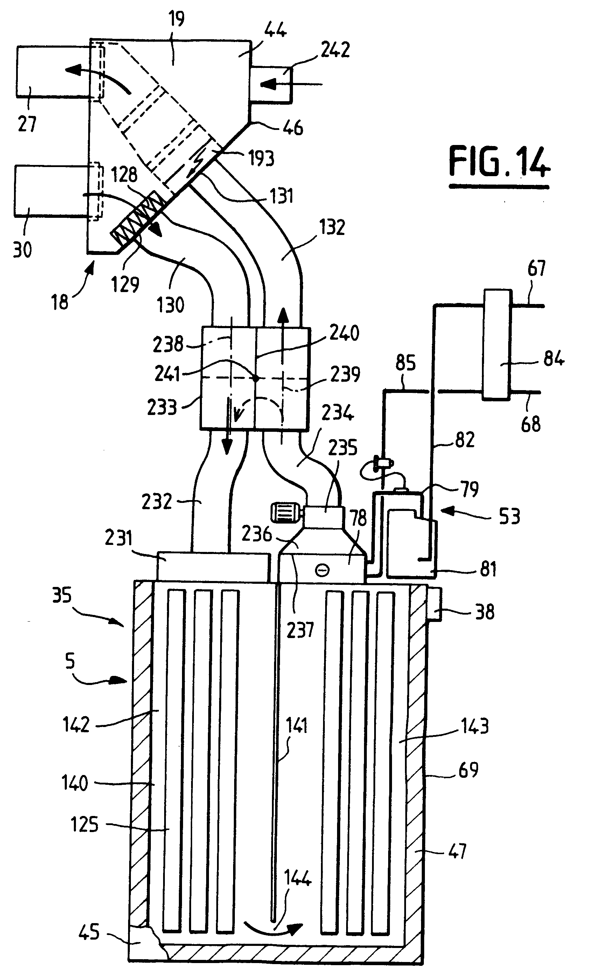

On a illustré aux figures 10 à 14 plusieurs exemples de modules tels que dans lesquels aucun liquide antigel ou congelable n'est prévu à cet effet ; les figure 10 et 11 à 13 correspondent à des cas dans lesquels de l'air évoluant en circuit fermé est utilisé comme fluide caloporteur intermédiaire d'échange thermique entre l'eau congelable ou la glace accumulée dans le bac, d'une part, et l'air à injecter dans la salle respective, d'autre part, ainsi que pour assurer la fabrication de la glace dans le bac, alors que la figure 14 correspond à un cas dans lequel l'air à injecter dans la salle correspondante est placé en relation d'échange thermique direct avec l'eau congelable ou la glace dans le bac, et sert alternativement à fabriquer cette glace et à en extraire des frigories pour être injecté à l'état refroidi dans la salle correspondante.

On se réfèrera en premier lieu à la figure 10 où l'on a illustré un module 5 comportant deux sous-ensembles propres 18 et 35, respectivement suspendus et reposant au sol, et pouvant en outre comporter un sous-ensemble analogue au sous-ensemble 37, commun aux différents modules groupés dans un même local technique, de façon non représentée mais aisément déductible, par un Homme du métier, de la description des figures 1 à 9.

Le sous-ensemble 18 se limite dans ce cas au caisson 19 comportant les raccords 27, 30, 242 précités, respectivement pour le refoulement d'air vers la salle correspondante 3, l'aspiration d'air dans cette salle 3, et l'introduction d'air neuf en provenance de la conduite 242. Toutefois, à la différence du caisson 19 décrit en référence à la figure 2 et des caissons correspondants décrits dans EP-B-0 302 768, le caisson 19 comporte dans le mode de réalisation de la figure 10 un filtre 128 interposé sur le trajet suivi par l'air aspiré dans la salle correspondante, entre le raccord 30 et un orifice 129 du caisson 19 ; cet orifice 129 communique avec le caisson de traitement d'air 20, à l'origine du circuit interne 17 de celui-ci, dans le cas du module décrit en référence à la figure 2, et sert au raccordement étanche d'une gaine 130 de transport d'air dans le cas du module illustré à la figure 10 ; en outre, sur la trajectoire suivie par l'air refoulé vers la salle 3, entre un orifice 131 qui communique avec le caisson 20, à la fin du circuit interne 17 de celui-ci, dans le cas du module illustré à la figure 2 et sert au raccordement étanche d'une gaine 132 de transport d'air dans le cas du module illustré à la figure 10, et le raccord 27 de refoulement d'air, le caisson 19 comporte dans le cas de la figure 10 une batterie chaude 133 qui est de préférence constituée par des résistances électriques chauffantes, dont l'alimentation en électricité à partir de la ligne 256 est commandée par les moyens réglables 38, mais pourrait également assurer le réchauffage de l'air par échange thermique direct avec de l'eau chaude, notamment fournie par un sous-ensemble 37 éventuel ; les deux gaines 130 et 132, comme les orifices 129 et 131, sont intégralement situées entre les prolongements géométriques coplanaires des faces latérales 44 du caisson 19 et des faces latérales 45 du sous-ensemble 35, afin de conserver la possibilité de juxtaposition mutuelle de plusieurs modules sans entraver pour autant l'accès aux composants sur lesquels on peut être amené à intervenir lors d'opérations de maintenance et en autorisant le dégagement d'un 'module par des mouvements exclusivement parallèles aux faces latérales 44 et 45 et aux prolongements géométriques coplanaires de celles-ci.

Dans une zone supérieure du sous-ensemble 35, la gaine 130, acheminant de l'air aspiré dans la salle correspondante 3, se raccorde à l'entrée 134 du circuit secondaire, non référencé, d'un échangeur air - air 135 alors que la gaine 132, véhiculant de l'air à refouler vers la salle 3, se raccorde par l'intermédiaire d'un moto-ventilateur électrique 136 dont l'alimentation à partir de la ligne 256 est commandée par les moyens réglables 38 à la sortie 137 du circuit secondaire de l'échangeur 135.

Le circuit secondaire de l'échangeur air - air 135 est horizontal dans l'exemple illustré, et le circuit primaire de cet échangeur est quant à lui vertical.

Compte tenu de cette orientation, le circuit primaire de l'échangeur 135 présente respectivement vers le haut et vers le bas une entrée 138 et une sortie 139, laquelle est immédiatement superposée à une batterie à détente directe constituant l'évaporateur 78 de l'appareil frigorifique 53 que l'on retrouve par ailleurs à l'identique, en partie supérieure du sous-ensemble 35 et dont les calories produites au niveau du condenseur 84 peuvent être récupérées au niveau du sous-ensemble 37 éventuel, non représenté, ou évacuées à l'atmosphère.

L'air traversant le circuit primaire de l'échangeur 135 de son entrée 138 vers sa sortie 139, c'est-à-dire de haut en bas, sous l'action de moyens qui seront décrits plus loin, traverse ainsi également de haut en bas la batterie à détente directe ou évaporateur 78 pour parvenir à l'intérieur du bac 69 conservé quant à sa conformation extérieure mais différent, dans sa conception intérieure, des bacs 69 précédemment décrits.

Comme à l'intérieur du bac 69 décrit en référence à la figure 3, de l'eau congelable ou, suivant la température de celle-ci, de la glace est confinée à l'intérieur de bouteilles étanches 125 réparties à l'intérieur du bac 69 mais cette fois verticales, de façon à délimiter entre elles et avec les parois du bac 69 des passages verticaux 140 pour l'air, ces passages communiquant entre eux dans une zone inférieure du bac 69.

Les bouteilles 125 comme les passages 140 présentent une orientation générale perpendiculaire aux faces latérales 45 du bac 69 qu'une chicane 141 également verticale et perpendiculaire à ces faces latérales 45 subdivise intérieurement de façon étanche, en deux moitiés 142, 143 qui ne communiquent entre elles qu'au niveau d'un passage 144 situé dans une zone inférieure du bac pour assurer dans cette zone une communication entre les passages d'air 140 situés respectivement dans l'une et l'autre des moitiés 142 et 143.

Seule la moitié 142 communique avec la sortie 139 du circuit primaire de l'échangeur 135 par l'intermédiaire de la batterie à détente directe ou évaporateur 78 si bien que l'air ayant traversé cette dernière parcourt des passages 140 de la moitié 142 du bac 69 de haut en bas puis s'engage par le passage 144 dans les passages 140 correspondant à l'autre moitié 143 du bac 69.

En haut de la moitié 143 du bac 69 est disposé un collecteur d'aspiration 144 d'un moto-ventilateur électrique 145 dont l'alimentation à partir de la ligne 256 est commandée par les moyens réglables 38, et dont le refoulement présente la forme d'un collecteur 146 débouchant sur l'entrée 138 du circuit primaire de l'échangeur air - air 135.

Un Homme du métier comprendra aisément que, de façon commandée par les moyens réglables 38 :
- on puisse faire fonctionner le moto-ventilateur 145 en même temps que le compresseur 81 pour fabriquer de la glace à l'intérieur des bouteilles 125 du bac 69 alors que le ventilateur 136 est arrêté, ou au contraire alors que le ventilateur 136 fonctionne pour refroidir l'air aspiré dans la salle 3, additionné d'air neuf puis refoulé dans la salle 3 ;
- alors que le compresseur 81 et le moto-ventilateur 145 sont arrêtés, on puisse provoquer au moyen du ventilateur 136 une aspiration et un refoulement d'air dans la salle 3 en réchauffant au besoin cet air, additionné d'air neuf, au passage de la batterie chaude 133 ;
- en faisant fonctionner les moto-ventilateurs 136 et 145 sans faire fonctionner la batterie chaude 133, on puisse aspirer de J'air dans la salle 3 puis le refouler après l'avoir additionné d'air neuf et refroidi, par destockage des frigories accumulées par la glace dans les bouteilles 125, alors que le compresseur 81 est à l'arrêt, étant entendu que le compresseur 81 peut être remis en route si des sondes de température permettent de constater que la capacité des bouteilles 125 en frigories est insuffisante pour répondre aux besoins, exprimés en termes de température que l'on désire atteindre dans la salle 3.

Dans une variante de réalisation interne du bac 69, les passages d'air 140 et les bouteilles 125 de stockage d'eau congelable ou de glace pourraient être remplacés respectivement par des faisceaux tubulaires d'échange thermique, servant à la circulation de l'air mû par le moto-ventilateur 145, et par des espaces étanches délimités par ces faisceaux tubulaires, et contenant l'eau congelable ou la glace, comme on l'a décrit en référence à la figure 7 de la demande de brevet français N° 92 03831, déposée le même jour que la présente demande au nom de la Société CARRIER S.A..

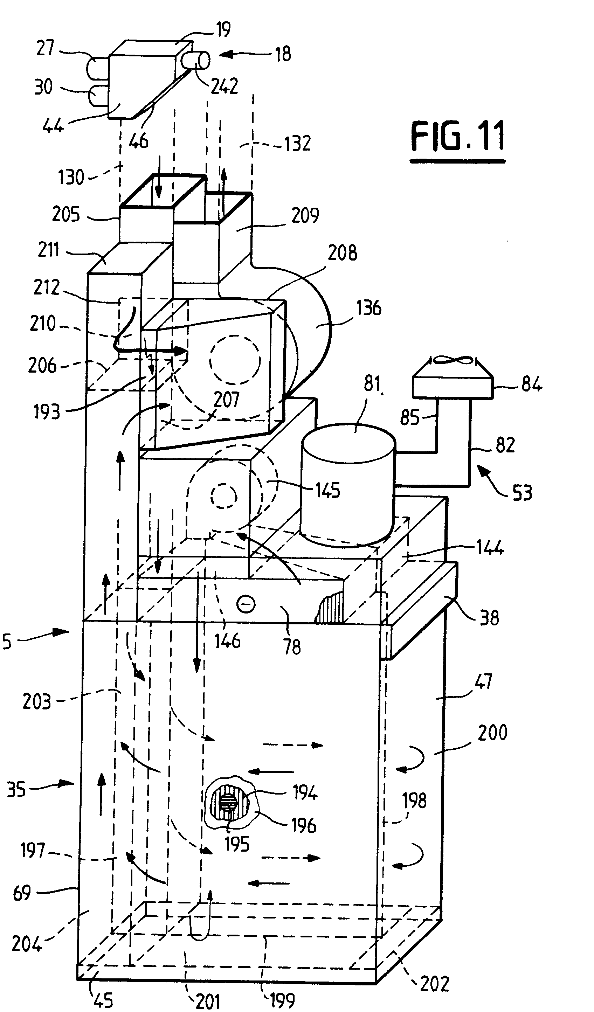

On se réfèrera à présent à la figure 11 qui illustre un module 5 qui se différencie des modules 5 précédemment décrits notamment par le fait qu'il ne présente pas la même dissociation en sous-ensembles 18 et 35.

Le sous-ensemble 35 peut dans ce cas être associé, ou non, à un sous-ensemble 37 de production d'eau chaude selon que l'on désire ou non récupérer pour la production d'eau chaude les calories dégagées au niveau du condenseur 84 de la machine frigorifique 53, que l'on retrouve dans ce mode de réalisation.

Il peut en outre être associé à un sous-ensemble 18 limité au caisson 19 décrit en référence à la figure 2, c'est-à-dire ne comportant notamment pas de batterie chaude contrairement à ce que l'on décrit en référence à la figure 10, le filtre 128 étant par contre conservé de préférence.

Toutefois, le sous-ensemble 35 est raccordé au caisson 19 comme on l'a décrit en référence à la figure 10, par des gaines 130 et 132 assurant respectivement le transport de l'air arrivant de la salle 3 à climatiser, additionné d'air neuf, et le retour de cet air vers la salle 3, après qu'il ait été porté par le module 5 à la température voulue.

Dans le cas de ce mode de réalisation, on retrouve le bac 69 mais celui-ci renferme des moyens définissant non seulement des espaces de stockage d'eau congelable ou de glace, mais également des circuits respectivement pour de l'air primaire, destiné à la fabrication de cette glace dans les conditions indiquées en référence à la figure 10, et pour de l'air secondaire, et en pratique l'air prélevé dans la salle 3, éventuellement additionné d'air neuf, puis réinjecté dans cette salle 3.

A cet effet, on prévoit avantageusement à l'intérieur du bac 69 l'un quelconque des dispositifs échangeurs de chaleur entre de l'eau congelable ou glace, de l'air destiné à assurer la congélation de cette eau et de l'air destiné à reprendre des frigories ainsi accumulées sous forme de glace, décrits en référence aux figures 3 et 8 de la demande de brevet français précitée, en leur adjoignant des moyens collecteurs appropriés, dont la réalisation relève des aptitudes normales d'un Homme du métier.

A titre d'exemple non limitatif, on a illustré à la figure 11 l'utilisation, à l'intérieur du bac 69, des moyens décrits en référence à la figure 3 de la demande de brevet français précitée, assurant un flux croisé de l'air primaire et de l'air secondaire dans des faisceaux plats de tubes respectivement verticaux 194 et horizontaux 195, réunis en groupes plats qui délimitent entre eux des espaces 196 de stockage de glace et dans lesquels les tubes horizontaux 195 sont de façon générale pris en sandwich entre les tubes verticaux 194. Ces faisceaux ou groupes de faisceaux sont orientés parallèlement aux faces latérales 45 du bac 69 et répartis pour moitié, de même que les espaces 196, respectivement de part et d'autre d'une chicane étanche 197 orientée parallèlement aux faces latérales 45, rattachée de façon étanche à la paroi du bac 69 dans une zone de cette paroi dans laquelle la face périphérique 47 est verticale et orientée comme les raccords 27 et 30 du caisson 19, alors que la chicane 197 présente respectivement à l'opposé et vers le bas un chant vertical 198 et un chant horizontal 199 disjoints de la paroi du bac 69 de façon à dégager respectivement un passage 200 de communication entre les tubes 195 horizontaux disposés respectivement de part et d'autre de la chicane 197 et destinés à être parcouru par l'air secondaire, et un passage 201 de communication entre les tubes 194 verticaux, disposés respectivement de part et d'autre de la chicane 197 et destinés à être parcourus par l'air primaire. Une paroi horizontale 202 étanche, raccordée de façon étanche au chant 199 de la chicane 197 ainsi que, de toute part, aux parois du bac 69 isole mutuellement, de façon étanche, d'une part les passages 200 et 201 et d'autre part le passage 201 et deux cheminées 203, 204, elles-mêmes isolées mutuellement par la chicane 197, qui subsistent respectivement de part et d'autre de cette chicane 197 entre les parois du bac 69, d'une part, et les ensembles de groupes de faisceaux 194, 195 et d'espaces 196 de stockage d'eau congelable ou de glace, à l'opposé du chant 198 de la chicane 197, d'autre part; les tubes horizontaux 195 débouchent dans celle des cheminées 203, 204 qui est située du même côté de la chicane 197 qu'eux, ce qui définit par la cheminée 203, les tubes horizontaux 195 et la cheminée 204, à l'intérieur du bac 69, un circuit d'air secondaire ; les tubes verticaux 194 disposés respectivement de part et d'autre de la chicane 197 définissent quant à eux avec le passage 201, à l'intérieur du bac 69, un circuit d'air primaire, sans communication avec le circuit d'air secondaire.

Ce circuit d'air primaire est complété, immédiatement au-dessus du bac, de la façon décrite en référence à la figure 10, c'est-à-dire par l'évaporateur 78 de l'appareil frigorifique 53 d'un côté de la chicane 197 et, de l'autre côté de celle-ci, par le collecteur 144 d'aspiration du ventilateur primaire 145 dont le collecteur de refoulement 146 débouche par contre directement sur l'évaporateur 78.

La cheminée 203 sert à l'admission, dans les tubes horizontaux 195, de l'air repris dans la salle 3 correspondant au module 5 et de l'air neuf et, à cet effet, se prolonge verticalement, vers le haut, au-dessus du bac 69 jusqu'à un embout 205 de raccordement de la gaine 130.

La cheminée 204 se prolonge également verticalement, vers le haut, jusqu'au-dessus du bac 69 et plus précisément jusqu'à un niveau légèrement supérieur à celui du ventilateur 145, niveau auquel elle est obturée de façon étanche par une paroi horizontale 206 mais présente, entre cette paroi 206 et le niveau du ventilateur 145, un orifice 207 de communication avec un collecteur 208 d'admission du ventilateur 136 dont le refoulement présente la forme d'un embout 209 de raccordement de la gaine 132, directement juxtaposé à l'embout 205 ; le ventilateur 136 et l'embout 208 sont directement superposés au ventilateur 145.

Dans le collecteur 208 débouche en outre un orifice 210 disposé immédiatement au-dessus de l'orifice 207 et muni de la batterie chaude 193, avantageusement électrique bien qu'une batterie à circulation d'eau chaude puisse également être prévue ; cet orifice 210, isolé de la cheminée 204 et de son orifice 207 par la paroi 206, est en communication permanente avec la cheminée 203 par l'intermédiaire d'un prolongement 211 de la cheminée 204 vers le haut, ce prolongement 211 présentant la forme d'une boîte fermée de façon étanche si l'on excepte l'orifice 210 et un orifice 212 de communication avec la cheminée 203 immédiatement en dessous de l'embout 205.

Des moyens sont prévus pour ouvrir l'orifice 210 en fermant l'orifice 207 lorsque l'air a injecter dans la salle 3 doit être chauffé, ce que l'on effectue par passage de cet air à travers la batterie 193 convenablement alimentée en énergie de façon commandée par les moyens réglables 38, et pour fermer l'orifice 210 en ouvrant l'orifice 207 lorsque cet air doit être refroidi, ce que l'on effectue en le faisant circuler à l'intérieur du bac 69, en relation d'échange thermique avec l'air primaire se trouvant dans les tubes 194, eux-mêmes en relation d'échange thermique avec la glace située dans les espaces 196 et, éventuellement, si un destockage des frigories accumulées dans la glace ne suffit pas à répondre aux besoins, en remettant le compresseur en route.

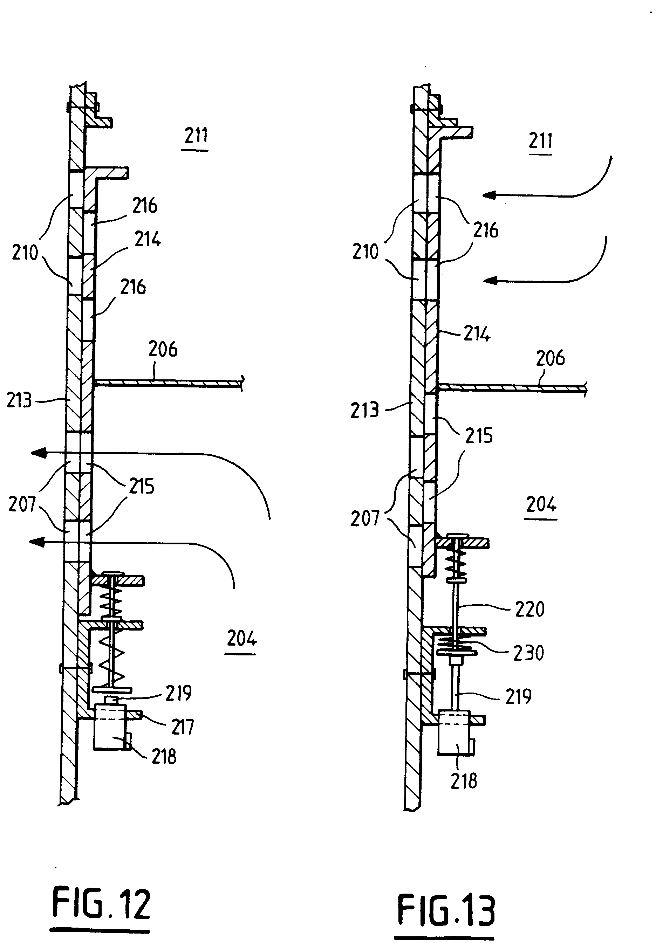

Un exemple de dispositif permettant ainsi d'ouvrir l'un des orifices 207 et 210 en obturant l'autre, en alternance selon les besoins dans la salle 3 correspondant au module 5, est illustré aux figures 12 et 13 où l'on voit que les orifices 207 et 210 sont aménagés dans une même paroi plate, verticale 213 de la cheminée 204 et de son prolongement 211, sous forme d'une pluralité de fentes horizontales, mutuellement identiques, et réparties identiquement respectivement en dessous de la paroi 206 et au-dessus de celle-ci. Contre la paroi 216, verticale, est monté au coulissement vertical un registre plat, vertical 214 chevauchant la paroi 206 et présentant d'une part en dessous de celle-ci des fentes 215 identiques aux fentes définissant l'orifice 207 et disposées les unes par rapport aux autres de façon identique à celles-ci de telle sorte que, par un coulissement approprié du registre 214 contre la paroi 213, on puisse amener ces fentes 215 en registre avec les fentes définissant l'orifice 207 ; de même, au-dessus de la paroi 206, le registre 214 présente des fentes 216 identiques aux fentes définissant l'orifice 210 et disposées identiquement à ces dernières de telle sorte que, par coulissement du registre 214 le long de la paroi 213, on puisse amener ces fentes 216 en registre avec les fentes formant l'orifice 210. Toutefois, le groupe formé par les fentes 216 présente par rapport au groupe formé par les fentes 215 un positionnement différent, en direction verticale, de celui que les fentes définissant l'orifice 210 présentent par rapport aux fentes définissant l'orifice 207 sur la paroi 213 si bien que, comme le montrent les figures 12 et13, une coïncidence des fentes 215 avec les fentes définissant l'orifice 207 s'accompagne d'un décalage vertical des fentes 216 par rapport aux fentes définissant l'orifice 210, avec obturation de ce dernier par le registre 214, et inversement, comme le montre la figure 13.

Des moyens moteurs 217 permettent de faire évoluer le registre 214 entre sa position dans laquelle les fentes 215 coïncident avec les fentes définissant l'orifice 207 et sa position dans laquelle ces fentes 216 coïncident avec les fentes définissant l'orifice 210.

Ces moyens 217 peuvent être commandés par les moyens réglables 38 selon que l'on se trouve en période de chauffe ou de réfrigération de la salle 3, et présenter par exemple la forme d'un électro-aimant ; ils peuvent également se présenter sous la forme de moyens maintenant le registre 214 dans une position d'ouverture de l'orifice 207 tant que la batterie chaude 193 n'est pas en service et détectant la mise en service de celle-ci, commandée par les moyens réglables 38, c'est-à-dire l'échauffement qui en résulte, pour provoquer pendant les périodes de chauffe le passage du registre 214 à sa position d'ouverture de l'orifice 210. De tels moyens ont été illustrés aux figures 12 et 13, sous forme d'un pot 218 contenant une substance fortement dilatable sous l'effet d'une augmentation de température pour provoquer la sortie d'une tige verticale de poussée 219 qui agit alors sur le registre 214 dans le sens d'un coulissement vers le haut, correspondant à la fermeture de l'orifice 207 et de l'ouverture de l'orifice 210, par l'intermédiaire d'une liaison élastique 220 ; ces moyens comprennent en outre des moyens 230 de rappel élastique du registre 214 vers le bas, c'est-à-dire vers sa position d'obturation de l'orifice 210 et l'ouverture de l'orifice 207 correspondant à la position de rétractation de la tige de poussée 219 dans le pot 218, pour ramener le registre 214 à sa position d'ouverture de l'orifice 207 et de fermeture de l'orifice 210 lorsque la batterie chaude est ensuite arrêtée. Un tel dispositif est connu d'un Homme du métier et ne nécessite pas davantage de description.

Naturellement, bien que l'on ait décrit en référence à la figure 11 l'utilisation, comme moyens d'échange thermique entre l'air primaire, l'eau congelable ou la glace, et l'air secondaire du faisceau tubulaire du type décrit en référence à la figure 3 de la demande de brevet français précitée, un Homme du métier pourra aisément, sans sortir pour autant du cadre de l'invention, adopter à cet effet les moyens d'échange thermique décrits en référence à la figure 8 de ladite demande de brevet, ou encore d'autres moyens d'échange thermique.

Les modules de traitement d'air qui viennent d'être décrits en référence aux figures 10 et 11 à 13 nécessitent l'aménagement, respectivement au-dessus du bac 69 ou à l'intérieur de celui-ci, d'un circuit d'air primaire et d'un circuit d'air secondaire ne communiquant pas entre eux.

Le module de traitement d'air 5 illustré à la figure 14 permet d'éviter les complications qui en résultent.

Ce module 5 présente par ailleurs de grandes analogies avec celui qui a été décrit en référence à la figure 10, en ce sens qu'il comporte le sous-ensemble 18 sous la forme décrite en référence à cette figure, c'est-à-dire comportant le filtre 128 et la batterie chaude 193, respectivement au niveau d'un orifice 129 de liaison avec une gaine 130 de transport d'air et au niveau d'un orifice 131 de liaison avec une gaine 132 de transport d'air. Il peut également comporter le sous-ensemble 37 ou ne pas comporter de tel sous-ensemble, selon que l'on désire ou non récupérer les calories dégagées au niveau du condenseur 84 de l'appareil frigorifique 53, que l'on retrouve également dans ce mode de réalisation.

Le bac 69 entrant dans la composition du sous-ensemble 35 présente également la constitution décrite en référence à la figure 10, et l'on y retrouve en particulier la chicane 141 dégageant le passage 144, les bouteilles 125 de stockage d'eau congelable ou de glace et les passages d'air 140, répartis dans l'une et l'autre des moitiés 142 et 143 que la chicane 141 définit à l'intérieur du bac 69 ; comme on l'a dit en référence à la figure 10, la juxtaposition de passages 140 d'air et de bouteilles 125 de stockage d'eau congelable ou de glace pourrait être remplacée, respectivement de part et d'autre de la chicane 141, par des dispositifs du type illustré à la figure 7 de la demande de brevet français N° 92 03831, déposée le même jour que la présente demande au nom de CARRIER S.A..

Vers le haut, la moitié 142 du bac 69 se raccorde à un collecteur 231 d'admission d'air dans lequel débouche une gaine 232 raccordée à la gaine 130 par un dispositif distributeur 233 commandé par les moyens réglables 38 et qui sera décrit plus loin.

Le même distributeur 233 raccorde la gaine 132 à une gaine 234 elle-même raccordée au refoulement 235 d'un moto-ventilateur électrique 236 dont l'alimentation à partir de la ligne 256 est commandée par les moyens réglables 38 et qui présente par ailleurs un collecteur d'aspiration 237 débouchant à la partie supérieure de la moitié 143 du bac 69 par l'intermédiaire de la batterie de détente directe ou évaporateur 78 de l'appareil frigorifique 53.

Le distributeur 233 présente la forme générale d'un boîtier dans lequel la gaîne 232 débouche face à la gaine 130, suivant un alignement déterminé 238, et dans lequel la gaine 234 débouche en regard de la gaine 132, suivant un alignement 239 parallèle à l'alignement 238. Un registre 240 monté au pivotement à l'intérieur du distributeur 233, autour d'un axe 241 situé entre les deux alignements 238 et 239, peut être placé, de façon commandée par les moyens 38, soit dans une orientation illustrée en trait plein à la figure 14, dans laquelle il établit une communication entre les gaines 130 et 232 et une communication entre les gaines 132 et 234 en isolant mutuellement l'ensemble des deux gaines 130 et 232 de l'ensemble des deux gaines 132 et 234, soit dans une orientation illustrée en pointillés à la figure 1, dans laquelle il met en communication des gaines 130 et 132 qui l'isole des gaines 232 et 234 qu'il met par contre en communication ; la première de ces orientations correspond à une période de refroidissement de l'air injecté dans la salle 3, l'air prélevé dans celle-ci et additionné d'air neuf accomplissant un trajet qui, de l'embout 30 à l'embout 27, lui fait parcourir ou traverser successivement le filtre 128, la gaine 130, la gaine 232, la moitié 142 puis la moitié 143 du bac 69 où s'effectue un échange thermique direct avec la glace stockée dans les bouteilles 125, le ventilateur 236, la gaine 234, la gaine 132 et la batterie chaude 193 alors hors service. Le compresseur 81 est en principe alors arrêté mais peut être remis en route, de façon commandée par les moyens réglables 38, de façon à apporter un complément de frigories à l'air lorsque celui-ci traverse la batterie de détente directe 78, si la capacité de fourniture de frigories par la glace accumulée dans les bouteilles 125 est insuffisante au vu des besoins.

La deuxième de ces positions ferme une partie du circuit précédemment décrit par l'air en piégeant une certaine quantité de celui-ci ; en d'autres termes, l'air peut évoluer en circuit fermé, sous l'action du ventilateur 236 convenablement commandé par les moyens réglables 38, entre le distributeur 233, la gaine 232, la moitié 142 puis la moitié 143 du bac 69, la batterie de détente directe 78, le ventilateur 236 et la gaine 234 ; l'air ainsi piégé est utilisé pour congeler l'eau à l'intérieur des bouteilles 125, c'est-à-dire reconstituer les réserves de frigories ; à cet effet, le compresseur 81 est alors mis en route de telle sorte qu'au niveau de la batterie de détente directe 78 s'effectue un échange thermique entre le fluide frigorifique de l'appareil frigorifique 53 et l'air piégé. Cette position peut également correspondre à une position de chauffage de la salle 3 associée au module 5 dans la mesure où elle isole du circuit fermé ainsi constitué un autre circuit qui, de l'embout 30 à l'embout 27, fait parcourir à l'air prélevé dans la salle 3 puis additionné d'air neuf un circuit traversant successivement le filtre 128, la gaine 130, la gaine 132, et la batterie 193 qui peut alors être en service ; ce parcours peut être provoqué par le fait que de l'air est extrait en continu de la salle 3, en contrepartie de l'introduction d'air neuf, par des moyens non représentés (comportant notamment une gaine d'évacuation dans laquelle est placée la batterie 96 illustrée à la figure 6 et dans laquelle s'effectue un prélèvement par la gaine 123 dans le cas du dispositif illustré à la figure 8) ; le cas échéant, un ventilateur peut naturellement être prévu dans la gaîne 132 pour provoquer plus énergiquement le passage de l'air de l'embout 30 à l'embout 27.

Un Homme du métier comprendra aisément que les modes de mise en oeuvre de l'invention qui viennent d'être décrits ne constituent que des exemples non limitatifs et que, en particulier, il est possible de créer d'autres combinaisons entre les moyens qui ont été décrits en tant que moyens pour produire de la glace à partir d'eau congelable et les moyens qui ont été décrits en tant que moyens pour destocker les frigories ainsi accumulées, pour refroidir de l'air destiné à être injecté dans une salle.

## Revendications

1. Installation de traitement d'air, destinée à la ventilation et à la climatisation d'une pluralité de salles (1, 2, 3) et comportant à cet effet une pluralité de modules de traitement d'air (5, 6, 7) logés dans un local technique (4) et dont chacun comporte notamment :
- un raccord respectif d'aspiration d'air (30) relié à une salle respective (1, 2, 3),
- un raccord respectif de soufflage d'air (27) relié à la salle respective (1, 2, 3),
- un circuit interne respectif d'air (17, 130, 132, 140, 195, 203, 204, 208, 232, 234) reliant mutuellement lesdits raccords d'aspiration d'air et de soufflage d'air (30, 27),
- des moyens respectifs de ventilation et de climatisation (33, 34, 36, 41, 105, 128, 133, 135, 136, 140, 193, 195) interposés dans le circuit interne d'air (17, 130, 132, 140, 195, 202, 204, 208, 232, 234) et comportant notamment des moyens (34, 135, 140, 155) d'échange thermique entre l'air et un milieu réfrigéré,
- des moyens respectifs (54, 57, 60) de raccordement des moyens de ventilation et de climatisation (33, 34, 36, 41, 104, 128, 133, 135, 136, 140, 193, 195) à des moyens d'alimentation en énergie (256),
- des moyens réglables respectifs (38, 39, 40) de régulation des moyens de ventilation et de climatisation,
caractérisée en ce que le milieu réfrigéré est de l'eau congelable et en ce que chaque module (5, 6, 7) comporte des moyens respectifs (69, 125, 127, 196) de stockage de l'eau congelable et des moyens respectifs de congélation de celle-ci, commandés par les moyens réglables de régulation respectifs (38, 39, 40).

2. Installation selon la revendication 1, caractérisée en ce que les moyens de congélation (53) sont électriques et en ce que les moyens (54, 57, 60) de raccordement à des moyens d'alimentation en énergie (256) sont des moyens de raccordement électrique.

3. Installation selon l'une quelconque des revendications 1 et 2, caractérisée en ce que chaque module (5, 6, 7) comporte en outre des moyens électriques de chauffage (133, 193), interposés dans le circuit interne respectif (17, 130, 132, 140, 196, 203, 204, 208, 232, 234) et commandés par les moyens réglables de régulation respectifs (38, 39, 40), et en ce que les moyens (54, 57, 60) de raccordement à des moyens d'alimentation en énergie (256) sont des moyens de raccordement électrique.

4. Installation selon l'une quelconque des revendications 1 à 3, caractérisée en ce que les moyens de congélation comportent un appareil frigorifique (53) comportant lui-même un évaporateur (78, 127) de fluide frigorifique et des moyens d'échange thermique entre le milieu réfrigéré (eau congelable) et le fluide frigorifique au niveau de l'évaporateur (78, 127).

5. Installation selon la revendication 4, caractérisée en ce que l'appareil frigorifique (53) comporte en outre un condenseur (84, 104) de fluide frigorifique et des moyens (37, 108) de circulation d'un fluide de refroidissement en relation d'échange thermique direct avec le fluide frigorifique au niveau du condenseur (84, 104).

6. Installation selon la revendication 5, caractérisée en ce que les moyens de circulation (37, 108) sont communs à plusieurs modules (5, 6, 7).

7. Installation selon l'une quelconque des revendications 5 et 6, caractérisée en ce que les moyens de circulation (37, 108) comportent des moyens (96, 120) d'évacuation de calories du fluide de refroidissement à l'atmosphère.

8. Installation selon la revendication 7, caractérisée en ce que les moyens de circulation sont constitués par un circuit d'extraction d'air vicié, débouchant à l'atmosphère.

9. Installation selon l'une quelconque des revendications 5 à 7, caractérisée en ce que les moyens de circulation (37, 108) comportent des moyens (86, 97, 101, 108, 105, 115) de récupération de calories du fluide de réfrigération à des fins de chauffage.

10. Installation selon la revendication 9, caractérisée en ce que les moyens de circulation sont constitués par un circuit (108) d'air de climatisation et en ce que chaque module (5, 6, 7) comporte en outre des moyens (105) d'échange thermique direct avec l'air de climatisation, interposés dans le circuit interne respectif (17), raccordés au circuit (108) d'air de climatisation et commandés par les moyens réglables de régulation respectifs.

11. Installation selon la revendication 9, caractérisée en ce que les moyens de circulation (37) sont constitués par un circuit (86, 97) d'eau chaude à usage sanitaire ou de chauffage.

12. Installation selon l'une quelconque des revendications 9 à 11, caractérisée en ce que les moyens de circulation (37, 108) comportent des moyens (86, 101, 115) d'échange thermique direct entre le fluide de refroidissement et de l'eau d'un circuit (86, 97, 101, 115) d'eau chaude à usage sanitaire ou de chauffage.

13. Installation selon l'une quelconque des revendications 11 et 12, caractérisée en ce que le circuit d'eau chaude (86, 97, 101, 115) est commun à plusieurs modules (5, 6, 7).

14. Installation selon la revendication 13, caractérisée en ce que le circuit d'eau chaude (86, 97, 101, 115) comporte des moyens de chauffage d'appoint (102).

15. Installation selon l'une quelconque des revendications 11 à 14, caractérisée en ce que chaque module (5, 6, 7) comporte en outre une batterie (36) d'échange thermique direct entre l'air et l'eau chaude, interposée dans le circuit interne respectif (17), raccordée au circuit d'eau chaude (86, 97) et commandée par les moyens réglables de régulation respectifs (38, 39, 40).

16. Installation selon l'une quelconque des revendications 4 à 15, caractérisée en ce que les moyens d'échange thermique entre le milieu réfrigéré (eau congelable) et le fluide frigorifique sont des moyens d'échange thermique direct, l'évaporateur étant constitué par un circuit (127) de détente directe du fluide frigorifique, placé en relation d'échange thermique direct avec le milieu réfrigéré (eau congelable) au niveau des moyens de stockage (69).

17. Installation selon l'une quelconque des revendications 4 à 15, caractérisée en ce que les moyens d'échange thermique entre le milieu réfrigéré (eau congelable) et le fluide frigorifique sont des moyens d'échange thermique indirect et comportent un circuit (49, 71, 76, 140, 144, 146, 194, 201, 232, 233, 234) de fluide caloporteur incluant des moyens d'échange thermique direct entre le fluide caloporteur et le fluide frigorifique, au niveau de l'évaporateur (78), d'une part, et entre le fluide caloporteur et le milieu réfrigéré (eau congelable), au niveau des moyens de stockage (69, 125, 196), d'autre part.

18. Installation selon l'une quelconque des revendications 1 à 17, caractérisée en ce que les moyens d'échange thermique entre l'air et le milieu réfrigéré (eau congelable) sont des moyens d'échange thermique indirect et comportant un circuit (49, 71, 140, 144, 146, 194) de fluide caloporteur incluant des moyens d'échange thermique direct entre le fluide caloporteur et le milieu réfrigéré (eau congelable) au niveau des moyens de stockage (69, 125, 127, 196), d'une part, et entre le fluide caloporteur et l'air au niveau du circuit interne (17, 130, 138, 195, 202, 204, 208), d'autre part.

19. Installation selon les revendications 17 et 18 en combinaison, caractérisée en ce que chaque module (5, 6, 7) comporte un seul circuit (49) de fluide caloporteur, incluant les moyens d'échange thermique direct entre le fluide caloporteur, unique, et
- le fluide frigorifique au niveau de l'évaporateur (78),
- le milieu réfrigéré (eau congelable) au niveau des moyens de stockage (125),
- l'air au niveau du circuit interne (17).

20. Installation selon les revendications 17 et 18 en combinaison, caractérisée en ce que chaque module (5, 6, 7) comporte deux circuits de fluide caloporteur distincts (49, 71, 76), dont l'un inclut les moyens d'échange thermique direct entre le fluide caloporteur et le fluide frigorifique au niveau de l'évaporateur (78), dont l'autre inclut les moyens d'échange thermique direct entre le fluide caloporteur et l'air au niveau du circuit interne (17), et qui présentent en commun les moyens d'échange thermique direct (71) entre le fluide caloporteur et le milieu réfrigéré (eau congelable) au niveau des moyens de stockage (69).

21. Installation selon l'une quelconque des revendications 17 à 20, caractérisée en ce que le fluide caloporteur est un liquide.

22. Installation selon l'une quelconque des revendications 17 à 20, caractérisée en ce que le fluide caloporteur est de l'air.

23. Installation selon l'une quelconque des revendications 1 à 17, caractérisée en ce que les moyens d'échange thermique entre l'air et le milieu réfrigéré (eau congelable) sont des moyens d'échange thermique direct, le circuit interne d'air (130, 132, 203, 204, 208, 232, 234) étant placé en relation d'échange thermique direct avec le milieu réfrigéré (eau congelable) au niveau des moyens de stockage (125).

24. Installation selon la revendication 23 en combinaison avec la revendication 17, caractérisée en ce que le fluide caloporteur est constitué par de l'air, en ce que le circuit de fluide caloporteur constitue une partie (140, 232, 234) du circuit interne d'air (130, 132, 140, 232, 234) et en ce que sont prévus des moyens (233) pour fermer provisoirement ladite partie (140, 232, 234) sur elle-même en l'isolant des raccords d'aspiration d'air et de soufflage d'air (30, 27), de façon commandée par les moyens réglables de régulation (38, 39, 40).

25. Installation selon l'une quelconque des revendications 1 à 24, caractérisée en ce qu'elle comporte des moyens (42, 43) d'alimentation du circuit interne des modules de traitement d'air en air (5, 6, 7) neuf.

26. Installation selon l'une quelconque des revendications 1 à 25, caractérisée en ce que les modules de traitement d'air (5, 6, 7) sont identiques.

27. Module de traitement d'air, comportant notamment :
- un raccord d'aspiration d'air (30),
- un raccord de soufflage d'air (27),
- un circuit interne d'air (17, 130, 132, 140, 195, 203, 204, 208, 232, 234) reliant mutuellement lesdits raccords d'aspiration d'air et de soufflage d'air (30, 27),
- des moyens de ventilation et de climatisation (32, 34, 36, 41, 105, 128, 133, 135, 136, 140, 193, 195) interposés dans le circuit interne d'air (17, 130, 132, 140, 195, 203, 204, 208, 232, 234) et comportant notamment des moyens (34, 135, 140, 195) d'échange thermique entre l'air et un milieu réfrigéré,
- des moyens (54, 57, 60) de raccordement des moyens de ventilation et de climatisation (33, 34, 36, 41, 105, 128, 133, 135, 136, 140, 193, 195) à des moyens d'alimentation en énergie (256),
- des moyens réglables (38, 39, 40) de régulation des moyens de ventilation et de climatisation,
ledit module (5, 6, 7) étant délimité extérieurement par deux faces latérales planes (44, 45) mutuellement parallèles et par des faces périphériques (46, 47) qui raccordent mutuellement lesdites faces latérales (44, 45) et regroupent les raccords d'aspiration d'air et de soufflage d'air (30, 27), les moyens (54, 57, 60) de raccordement à des moyens d'alimentation en énergie (256), éventuellement les moyens réglables de régulation (38, 39, 40), et des moyens d'accès aux moyens de ventilation et de climatisation et, éventuellement, aux moyens réglables de régulation (38, 39, 40),
caractérisé en ce que le milieu réfrigéré est de l'eau et en ce que le module (5, 6, 7) comporte, entre lesdites faces latérales (44, 45) ou des prolongements géométriques coplanaires (63) de celles-ci, des moyens propres (69, 125, 127, 196) de stockage de l'eau congelable et des moyens propres (53) de congélation de celle-ci, commandés par les moyens réglables de régulation (38, 39, 40).

28. Module selon la revendication 27, caractérisé en ce que les moyens de congélation (53) sont électriques et en ce que les moyens (54, 57, 60) de raccordement à des moyens d'alimentation en énergie (256) sont des moyens de raccordement électrique.

29. Module selon l'une quelconque des revendications 27 et 28, caractérisé en ce qu'il comporte en outre des moyens électriques de chauffage (133, 193), interposés dans le circuit (17, 130, 132, 140, 196, 203, 204, 208, 232, 234) et commandés par les moyens réglables de régulation (38, 39, 40), et en ce que les moyens (54, 57, 60) de raccordement à des moyens d'alimentation en énergie (256) sont des moyens de raccordement électrique.

30. Module selon l'une quelconque des revendications 27 et 28, caractérisé en ce qu'il comporte en outre des moyens (36, 105) d'échange thermique direct entre l'air et un fluide de chauffage de celui-ci, commandés par les moyens réglables de régulation (38, 39, 40).

31. Module selon la revendication 30, caractérisé en ce que les moyens (36, 105) d'échange thermique direct entre l'air et un fluide de chauffage de celui-ci sont constitués par une batterie (36) d'échange thermique entre l'air et de l'eau chaude et en ce que le module comporte des moyens de raccordement de la batterie d'échange thermique (36) à un circuit extérieur d'eau chaude (51, 86), entre lesdites faces frontales (44, 45) ou des prolongements géométriques coplanaires (63) de celles-ci.

32. Module selon l'une quelconque des revendications 27 à 31, caractérisé en ce que les moyens de congélation comportent un appareil frigorifique (53) comportant lui-même un évaporateur (78, 127) de fluide frigorifique et des moyens d'échange thermique entre le milieu réfrigéré (eau congelable) et le fluide frigorifique au niveau de l'évaporateur (78, 127).

33. Module selon la revendication 32, caractérisé en ce que l'appareil frigorifique comporte en outre un condenseur (84, 104) de fluide frigorifique et des moyens (37, 168) de circulation d'un fluide de refroidissement en relation d'échange thermique direct avec le fluide frigorifique au niveau du condenseur (84, 104).

34. Module selon la revendication 33, caractérisé en ce qu'il comporte des moyens (67, 68) de raccordement du condenseur (84, 104) à des moyens extérieurs de circulation du fluide de refroidissement, entre lesdites faces frontales (44, 45) ou des prolongements géométriques coplanaires (63) de celles-ci.

35. Module selon la revendication 33 en combinaison avec la revendication 30, caractérisé en ce que le fluide de refroidissement constitue le fluide de chauffage de l'air et en ce que les moyens (37, 108) de circulation d'un fluide de refroidissement sont en relation d'échange thermique direct avec l'air au niveau de la batterie d'échange thermique (36, 105).

36. Module selon l'une quelconque des revendications 32 à 35, caractérisé en ce que les moyens d'échange thermique entre le milieu réfrigéré (eau congelable) et le fluide frigorifique sont des moyens d'échange thermique direct, l'évaporateur étant constitué par un circuit (127) de détente directe du fluide frigorifique, placé en relation d'échange thermique direct avec le milieu réfrigéré (eau congelable) au niveau des moyens de stockage (69).

37. Module selon l'une quelconque des revendications 32 à 35, caractérisé en ce que les moyens d'échange thermique entre le milieu réfrigéré (eau congelable) et le fluide frigorifique sont des moyens d'échange thermique indirect et comportent un circuit (49, 71, 76, 140, 144, 146, 194, 201, 232, 233, 234) de fluide caloporteur incluant des moyens d'échange thermique direct entre le fluide caloporteur et le fluide frigorifique, au niveau de l'évaporateur (78), d'une part et entre le fluide caloporteur et le milieu réfrigéré (eau congelable), au niveau des moyens de stockage (69, 125, 196), d'autre part.

38. Module selon l'une quelconque des revendications 27 à 37, caractérisé en ce que les moyens d'échange thermique entre l'air et le milieu réfrigéré (eau congelable) sont des moyens d'échange thermique indirect et comportent un circuit (49, 71, 140, 144, 146, 194) de fluide caloporteur incluant des moyens d'échange thermique direct entre le fluide caloporteur et le milieu réfrigéré (eau congelable) au niveau des moyens de stockage (69, 125, 127, 196), d'une part, et entre le fluide caloporteur et l'air au niveau du circuit interne (17, 130, 138, 195, 202, 204, 208), d'autre part.

39. Module selon l'une quelconque des revendications 37 et 38, caractérisé en ce qu'il comporte un seul circuit (49) de fluide caloporteur, incluant les moyens d'échange thermique direct entre le fluide caloporteur, unique, et
- le fluide frigorifique au niveau de l'évaporateur (78),
- le milieu réfrigéré (eau congelable) au niveau des moyens de stockage (125),
- l'air au niveau du circuit interne (17).

40. Module selon les revendications 37 et 38 en combinaison, caractérisé en ce qu'il comporte deux circuits de fluide caloporteur distincts (49, 71, 76), dont l'un inclut les moyens d'échange thermique direct entre le fluide caloporteur et le fluide frigorifique au niveau de l'évaporateur (78), dont l'autre inclut les moyens d'échange thermique direct entre le fluide caloporteur et l'air au niveau du circuit interne (17), et qui présentent en commun les moyens d'échange thermique direct (71) entre le fluide caloporteur et le milieu réfrigéré (eau congelable) au niveau des moyens de stockage (69).

41. Module selon l'une quelconque des revendications 37 à 40, caractérisé en ce que le fluide caloporteur est un liquide.

42. Module selon l'une quelconque des revendications 37 à 40, caractérisé en ce que le fluide caloporteur est de l'air.

43. Module selon l'une quelconque des revendications 27 à 37, caractérisé en ce que les moyens d'échange thermique entre l'air et le milieu réfrigéré (eau congelable) sont des moyens d'échange thermique direct, le circuit interne d'air (130, 132, 203, 204, 208, 232, 234) étant placé en relation d'échange thermique direct avec le milieu réfrigéré (eau congelable) au niveau des moyens de stockage (125).

44. Module selon la revendication 43 en combinaison avec la revendication 37, caractérisé en ce que le fluide caloporteur est constitué par de l'air, en ce que le circuit de fluide caloporteur constitue une partie (140, 232, 234) du circuit interne d'air (130, 132, 140, 232, 234) et en ce que sont prévus des moyens (233) pour fermer provisoirement ladite partie (140, 232, 234) sur elle-même en l'isolant des raccords d'aspiration d'air et de soufflage d'air (30, 27), de façon commandée par les moyens réglables de régulation (38, 39, 40).

45. Module selon l'une quelconque des revendications 27 à 44, caractérisé en ce qu'il comporte des moyens (42) de raccordement du circuit interne à des moyens (43) d'alimentation en air neuf, entre lesdites faces latérales (44, 45) ou des prolongements coplanaires (63) de celles-ci.
